# EUROPEAN PATENT APPLICATION

(11) **EP 4 495 879 A1**
(43) Date of publication of application: **22.01.2025**
(21) Application number: 23770334.3
(22) Date of filing: 24.02.2023
(51) Int. Cl.: G06T 7/00

(54) **INFORMATION PROCESSING DEVICE, INFORMATION PROCESSING METHOD, AND PROGRAM**

(30) Priority: 16.03.2022 JP 2022040979
(71) Applicant: Sony Group Corporation, Tokyo 108-0075 (JP)
(72) Inventor: UCHIDA, Naoki, Tokyo 108-0075 (JP)
(74) Representative: 2SPL Patentanwälte PartG mbB
(86) International application number: PCT/JP2023/006806
(87) International publication number: WO 2023/176375

(57) **Abstract**

To enable highly accurate person identification processing by executing person identification processing in a case where it is confirmed that an illumination state at the time of capturing an image is similar to an illumination state at the time of capturing a learning image from which collation feature information has been acquired. A person identification unit that inputs a camera-captured image, acquires feature information for person identification from the input image, and executes collation processing between the acquired feature information and the collation feature information to execute the person identification processing is included. The person identification unit determines whether or not the illumination state at the time of capturing the input image is similar to the illumination state at the time of capturing the learning image from which the collation feature information has been acquired with reference to an illumination control program generated in advance, and executes the person identification processing to which the input image is applied in a case where the similarity is determined.

## Description

### TECHNICAL FIELD

The present disclosure relates to an information processing device, an information processing method, and a program. More specifically, the present disclosure relates to an information processing device, an information processing method, and a program for enabling highly accurate person identification processing even in a case where an environment such as an illumination condition changes.

### BACKGROUND ART

In a case of generating a relay image or a recorded image of various performances performed on a stage such as a music live concert, there is a case where an image is captured by a mobile camera traveling on the same stage.

For example, an automated traveling robot equipped with a camera captures images of a performer (performer) such as a singer from various angles while moving around on the stage.

In such performance image capturing processing on the stage, in a case where there is a plurality of performers (performers) on the stage, there is a case where tracking processing of tracking one of the plurality of performers and continuously capturing images of the one performer is performed.

However, in a case where the performer moves around on the stage, the continuous tracking processing is difficult, and the camera may lose sight of the performer to be tracked.

In the case where the camera has lost sight of the tracking target (tracking target), an information processing device inputs a camera-captured image, performs processing of detecting a person to be tracked from objects in the image, that is, person identification processing, and continues the processing of tracking the person to be tracked again after the identification.

In the case of performing such person identification processing, for example, the following processing is sequentially executed.

First, feature information of the performer to be tracked, such as a face image, is stored in a storage unit as learning data.

Next, in the case of tracking the tracking target, feature data of a person image included in a new captured image and the learning data stored in the storage unit are collated to specify the person to be tracked.

The person identification processing and the tracking processing are executed by the collation processing using the feature data acquired in advance in this manner.

However, in a case where a performance is performed on a stage, an illumination state on the stage greatly changes due to switching of illumination. In such a case, the camera-captured image also greatly changes depending on the illumination state at the time of capturing an image.

For example, the stage may be in a completely dark state, and it is impossible to perform the person identification processing even using the captured image in such a case.

Note that Patent Document 1 (Japanese Patent Application Laid-Open No. 2002-304629) discloses a person identification processing control configuration of determining whether or not an illumination state is suitable for person identification processing in a case of performing person identification in an environment where variation in an illumination state is large such as common households, and not executing person identification in a case where the illumination state is not suitable.

However, unlike common households, the illumination state on the stage is irradiated with light not only from an upper direction but also from various directions such as right and left directions and a down direction, and a light irradiation state for a performer changes rapidly.

For example, even if a specific performer is selected as the person to be tracked immediately after the start of one music live concert and learning processing of acquiring feature data such as a face image of the person to be tracked is performed, the illumination state is often different from the illumination state when the learning processing is performed during a subsequent live concert period.

In such a case, the collation degree between the feature data obtained from the image captured in a state different from that at the time of executing the learning processing and the feature data acquired at the time of executing the learning processing decreases, and processing of identifying the person to be tracked becomes difficult.

### CITATION LIST

### PATENT DOCUMENT

Patent Document 1: Japanese Patent Application Laid-Open No. 2002-304629

### SUMMARY OF THE INVENTION

### PROBLEMS TO BE SOLVED BY THE INVENTION

The present disclosure has been made in view of the above problem, for example, and an object of the present disclosure is to provide an information processing device, an information processing method, and a program for enabling execution of highly accurate person identification processing under an environment such as a stage where an illumination state changes drastically.

### SOLUTIONS TO PROBLEMS

The first aspect of the present disclosure is
an information processing device including:
a person identification unit configured to input a camera-captured image, acquire feature information for person identification from the input image, and execute collation processing between the acquired feature information and collation feature information to execute person identification processing, in which
the person identification unit
determines whether or not an illumination state at a time of capturing the input image is similar to an illumination state at a time of capturing a learning image from which the collation feature information has been acquired, and
executes the person identification processing to which the input image is applied in a case where the similarity is determined.

Moreover, the second aspect of the present disclosure is
an information processing method executed in an information processing device, the information processing method including:
by a person identification unit, a person identification processing step of inputting a camera-captured image, acquiring feature information for person identification from the input image, and executing collation processing between the acquired feature information and collation feature information to execute person identification processing, in which
in the person identification step, the person identification unit executes:
   a step of determining whether or not an illumination state at a time of capturing the input image is similar to an illumination state at a time of capturing a learning image from which the collation feature information has been acquired; and
   a step of executing the person identification processing to which the input image is applied in a case where the similarity is determined.

Moreover, the third aspect of the present disclosure is
a program for causing an information processing device to execute information processing, the program for causing a person identification unit to execute:
a person identification processing step of inputting a camera-captured image, acquiring feature information for person identification from the input image, and executing collation processing between the acquired feature information and collation feature information to execute person identification processing; and
in the person identification step,
a step of determining whether or not an illumination state at a time of capturing the input image is similar to an illumination state at a time of capturing a learning image from which the collation feature information has been acquired; and
a step of executing the person identification processing to which the input image is applied in a case where the similarity is determined.

Note that a program of the present disclosure is a program that can be provided by, for example, a storage medium or a communication medium provided in a computer-readable format to an information processing device or a computer system that can execute various program codes. By providing such a program in a computer-readable format, processing corresponding to the program is implemented on the information processing device or the computer system.

Still other objects, features, and advantages of the present disclosure will become apparent from a more detailed description based on examples of the present disclosure as described later and the accompanying drawings. Note that, in the present specification, a system is a logical set configuration of a plurality of devices, and is not limited to a system in which devices of configurations are in the same housing.

According to the configuration of an example of the present disclosure, it is possible to perform highly accurate person identification processing by executing person identification processing in a case where it is confirmed that an illumination state at the time of capturing an image is similar to an illumination state at the time of capturing a learning image from which collation feature information has been acquired.

Specifically, for example, a person identification unit that inputs a camera-captured image, acquires feature information for person identification from the input image, and executes collation processing between the acquired feature information and the collation feature information to execute the person identification processing is included. The person identification unit determines whether or not the illumination state at the time of capturing the input image is similar to the illumination state at the time of capturing the learning image from which the collation feature information has been acquired with reference to an illumination control program generated in advance, and executes the person identification processing to which the input image is applied in a case where the similarity is determined.

With the configuration, it is possible to perform highly accurate person identification processing by executing the person identification processing in the case where it is confirmed that the illumination state at the time of capturing an image is similar to the illumination state at the time of capturing the learning image from which the collation feature information has been acquired.

Note that the effects described herein are merely examples and are not limited, and additional effects may also be provided.

### BRIEF DESCRIPTION OF DRAWINGS

Fig. 1 is a diagram for describing an outline of a stage for performing a performance such as a live concert and an outline of processing of the present disclosure.
Fig. 2 is a diagram for describing an example of illumination ON/OFF control sequences from start to end of a live concert.
Fig. 3 is diagrams for describing an example of a change in an illumination state for a performer who is a person to be tracked.
Fig. 4 is diagrams for describing an example of occurrence of a collation error of the performer who is the person to be tracked.
Fig. 5 is a diagram illustrating a flowchart for describing a sequence of processing executed by an information processing device of the present disclosure.
Fig. 6 is a diagram illustrating a flowchart for describing a sequence of processing executed by the information processing device of the present disclosure.
Fig. 7 is a diagram for describing a data configuration example of object identification learning data stored in a storage unit in object learning processing executed by the information processing device.
Fig. 8 is a table for describing an example of an illumination state similarity determination rule.
Fig. 9 is a diagram for describing an example of an ON/OFF control sequence in a performance execution period of each illumination and execution timing of the processing described with reference to the flowcharts illustrated in Figs. 5 and 6.
Fig. 10 is a diagram for describing a processing example of executing learning processing a plurality of times under different illumination states.
Fig. 11 is a diagram for describing an example in which an image capture robot equipped with a camera captures an image while moving on a stage.
Fig. 12 is diagrams for describing an example of a trajectory program of the image capture robot equipped with a camera.
Fig. 13 is a diagram illustrating a flowchart for describing a sequence of processing executed by the information processing device of the present disclosure.
Fig. 14 is a diagram illustrating a flowchart for describing a sequence of processing executed by the information processing device of the present disclosure.
Fig. 15 is a diagram for describing a data configuration example of the object identification learning data stored in the storage unit in the object learning processing executed by the information processing device.
Fig. 16 is a diagram illustrating a flowchart for describing a sequence of processing executed by the information processing device of the present disclosure.
Fig. 17 is diagrams for describing specific examples of image correction processing executed by the information processing device according to the present disclosure.
Fig. 18 is a diagram illustrating a flowchart for describing a sequence of processing executed by the information processing device of the present disclosure.
Fig. 19 is a diagram for describing an example of a state change on various stages.
Fig. 20 is a diagram for describing examples of data stored in a storage unit in the information processing device in the image capture robot.
Fig. 21 is a diagram for describing a data configuration example of the object identification learning data stored in the storage unit in the object learning processing executed by the information processing device.
Fig. 22 is a diagram for describing a configuration example of the information processing device of the present disclosure.
Fig. 23 is a diagram for describing a hardware configuration example of the information processing device according to the present disclosure.

### MODE FOR CARRYING OUT THE INVENTION

Hereinafter, an information processing device, information processing method, and program according to the present disclosure will be described in detail with reference to the drawings. Note that the description will be given in the following order.
1. Outline of processing of present disclosure
2. (Example 1) Example of executing person identification processing in consideration of illumination state
3. (Example 2) Example of executing plurality of pieces of learning processing under plurality of different illumination states
4. (Example 3) Example of executing person identification processing in consideration of position of image capture robot
5. Other examples
   5-1. (Example 4) Example of revising trajectory of image capture robot
   5-2. (Example 5) Example of performing processing of correcting captured image and executing person identification processing
   5-3 (Example 6) Example of executing person identification processing in consideration of various state changes on stage
6. Configuration example of information processing device
7. Hardware configuration example of information processing device
8. Conclusion of configuration of present disclosure

### [1. Outline of processing of present disclosure]

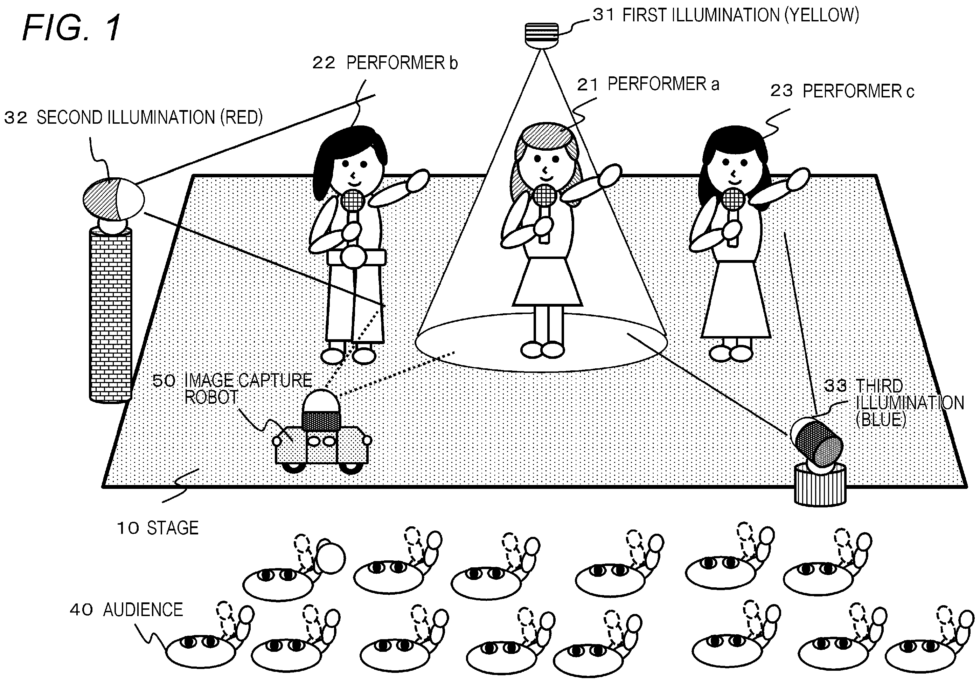

First, an outline of processing of the present disclosure will be described with reference to Fig. 1 and subsequent drawings.

Fig. 1 is a diagram illustrating an example of performance such as a music live concert performed on a stage. The example illustrated in Fig. 1 is an example in which three performers who are singers, that are, a performer a, 21, a performer b, 22, and a performer c, 23 perform a music live concert on a stage 10.

In front of the stage 10, there is a large audience 40 watching the performance of the performers 21 to 23.

The stage 10 is irradiated with illumination of various colors from a plurality of different directions.

Fig. 1 illustrates an example in which first illumination 31 that outputs yellow irradiation light from an upper direction of the stage 10, second illumination 32 that outputs red irradiation light from a left direction of the stage 10, and third illumination 33 that outputs blue irradiation light from a lower direction of the stage 10 are installed.

ON/OFF control of the plurality of pieces of illumination is performed according to a control program generated in advance, and an illumination state of the stage 10 is changed as needed.

Note that the number, configurations, and positions of the illumination illustrated in Fig. 1 are examples, and processing of the present disclosure can also be applied to other various illumination configurations.

In a case where various performances including such a music live concert and the like are performed on a stage as described above, there is a case where processing of capturing images of the performance is performed by a mobile camera that travels on the same stage.

An image capture robot 50 illustrated in Fig. 1 is a mobile device on which a camera is mounted, that is, a traveling robot, and moves around on the stage and captures the performance of the performers 21 to 23 from various angles. For example, an RGB color image (moving image) is captured.

Note that, hereinafter, a processing example in which the camera is mounted on the robot that moves around on the stage, and the robot moves around on the stage to capture an image will be described, but the processing of the present disclosure can be applied not only to the mobile camera but also to a configuration using a fixed camera.

The image capture robot 50 is an automated traveling robot (mobile device) such as a carriage or the like equipped with a camera, and captures images from various angles while traveling on the stage according to a defined traveling route (trajectory), for example.

In such performance image capturing processing on the stage, in the case where there is the plurality of performers 21 to 23 on the stage, as illustrated in Fig. 1, there is a case where tracking processing of setting one of the plurality of performers 21 to 23, for example, the performer a, 21 as an object to be tracked, and continuously capturing images of the one performer a, 21 is performed.

However, when the performers 21 to 23 move around on the stage, the image capture robot 50 may lose sight of the specific performer a, 21 to be tracked.

In the case where the tracking target (tracking target) is lost, either an information processing device in the image capture robot 50 or an external information processing device communicable with the image capture robot 50 performs processing of detecting the tracking target (tracking target) from a captured image.

That is, the information processing device inputs a camera-captured image, performs processing of detecting the person to be tracked from objects in the image, that is, person identification processing, and resumes the processing of tracking the person to be tracked again after the identification.

As described above, in the case of performing the person identification processing, for example, the following processing is sequentially executed.

First, as preliminary preparation processing, feature information of a performer to be tracked, such as a face image, is stored as learning data in a storage unit.

Specifically, for example, an operator selects one specific performer as the person to be tracked, and inputs selection information to the information processing device.

The information processing device acquires feature information such as a face image and feature point information from the captured image of the object to be tracked (performer to be tracked) selected according to the input information, and stores the feature information in the storage unit as the learning data.

This learning processing is executed, for example, immediately after the start of a performance such as a live concert.

Thereafter, person detection processing and the person identification processing are continuously executed from the captured image of the camera mounted on the image capture robot 50, so that the processing of tracking one specific performer, that is, the tracking processing is executed.

The person detection processing is processing of detecting an image area of a person from a captured image, and is executed by applying, for example, person shape detection processing or face image detection processing using existing pattern matching, or the like.

The person identification processing is processing of identifying who the detected person is. In the present example, processing of determining whether or not the detected person is the performer selected as the tracking target, that is, the object to be tracked (performer to be tracked), is executed.

This person identification processing is executed by collation processing between the feature data of the person detected from the currently captured image and feature data of the object to be tracked stored in the storage unit by the above-described learning processing.

Even in the case where the tracking target is lost, the person to be tracked is specified by collating the feature data of the person image included in the new captured image with the learning data stored in the storage unit.

The person identification processing is executed by the collation processing using the feature data acquired in advance in this manner.

However, in the case where the performance is performed on the stage as illustrated in Fig. 1, the illumination state on the stage frequently changes due to switching of the illumination. As a result, the image of the person captured by the camera greatly changes depending on the illumination state at the time of capturing the image.

For example, the stage may be in a completely dark state, and it is impossible to perform the person identification processing even using the captured image in such a case.

In such a case, the tracking target (tracking target) is lost, and it is necessary to perform processing of detecting the tracking target (tracking target) from the captured image after any of the illumination is turned on.

The information processing device inputs a camera-captured image, performs the processing of detecting the person to be tracked from objects in the image, that is, the person identification processing, and resumes the processing of tracking the person to be tracked again after the identification.

Furthermore, for example, the image of the performer a, 21 captured in a state where only the first illumination 31 of yellow light illustrated in Fig. 1 is emitted to the performer a, 21 as the object to be tracked and the image of the performer a, 21 captured in a state where only the third illumination 33 of blue light illustrated in Fig. 1 is emitted to the performer a, 21 have completely different impressions.

For example, in a case where the above-described learning processing is executed in a state where only the first illumination 31 is emitted to the performer a, 21 who is the object to be tracked (performer to be tracked), the learning data stored in the storage unit, that is, the face image, the feature point information, and the like of the performer a, 21 are feature data acquired from the captured image in the state where only the first illumination 31 is emitted to the performer a, 21.

Thereafter, the face image and the feature point information of the performer a, 21 acquired from the image of the performer a, 21 captured in a state where only the third illumination 33 of blue light is emitted to the performer a, 21 have many differences from the learning data stored in the storage unit, and there is a possibility that the collation degree is low, and the object may be determined not to be the performer a, 21.

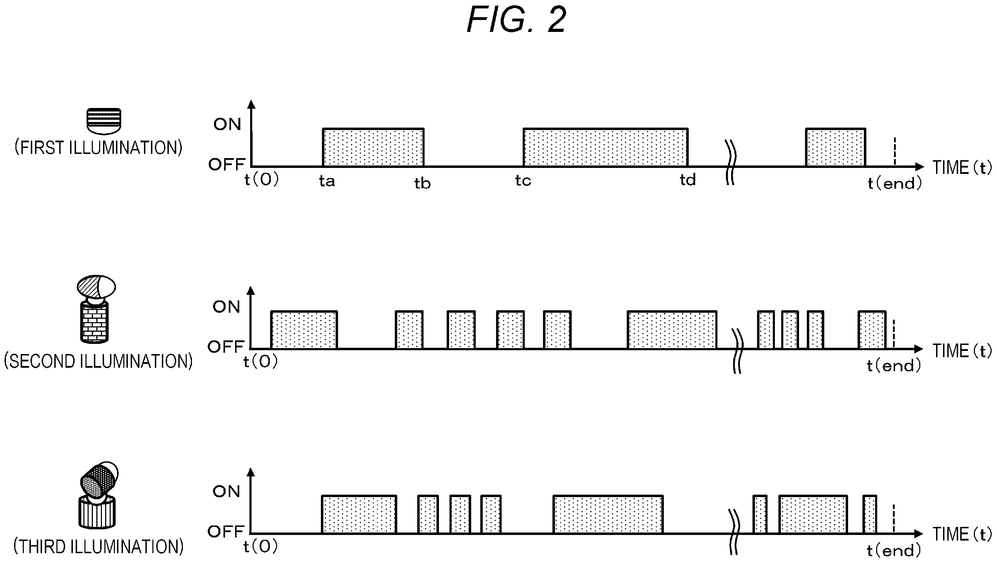

A specific example of a person identification error that occurs with a change in the illumination state will be described with reference to Fig. 2 and the subsequent drawings.

Fig. 2 is a diagram illustrating an example of ON/OFF control sequences from the start to the end of the live concert of the three pieces of illumination 31 to 33 illustrated in Fig. 1. That is, Fig. 2 is a diagram illustrating an example of ON/OFF control sequences from the start to the end of the live concert of the three pieces of illumination 31 to 33 below:
the first illumination 31 that outputs yellow illumination light from the upper direction of the stage 10;
the second illumination 32 that outputs red irradiation light from the left direction of the stage 10; and
the third illumination 33 that outputs blue irradiation light from the down direction of the stage 10.

As described above, ON/OFF control of these pieces of illumination 31 to 33 is performed according to a control program generated in advance. The control sequences illustrated in Fig. 2 illustrate an example of the control program.

In the three graphs illustrated in Fig. 2, the horizontal axis represents a time axis. The live concert starts at time t0 and ends at time t (end).

The pieces of illumination 31 to 33 are ON/OFF-controlled according to the sequences illustrated in the drawing during the live concert time t0 to t (end).

For example, as illustrated in Fig. 2, the first illumination 31 is programmed in advance with such an ON/OFF control sequence that the time t0 to ta = OFF, the time ta to tb = ON, the time tb to tc = OFF, .... The program is stored in a storage unit or the like of an illumination control device.

The first illumination 31 is ON/OFF-controlled according to this program sequence during a live concert execution period t0 to t (end).

As illustrated in Fig. 2, the ON/OFF control sequences of the live concert execution periods t0 to t (end) of the second illumination 32 and the third illumination 33 are also programmed in advance, and the ON/OFF control is performed according to the program sequences.

As understood from Fig. 2, in the live concert execution period t0 to t (end), an ON state and an OFF state of each piece of the first illumination 31 to the third illumination 33 are frequently switched, and the illumination state of the stage 10 changes rapidly at each timing.

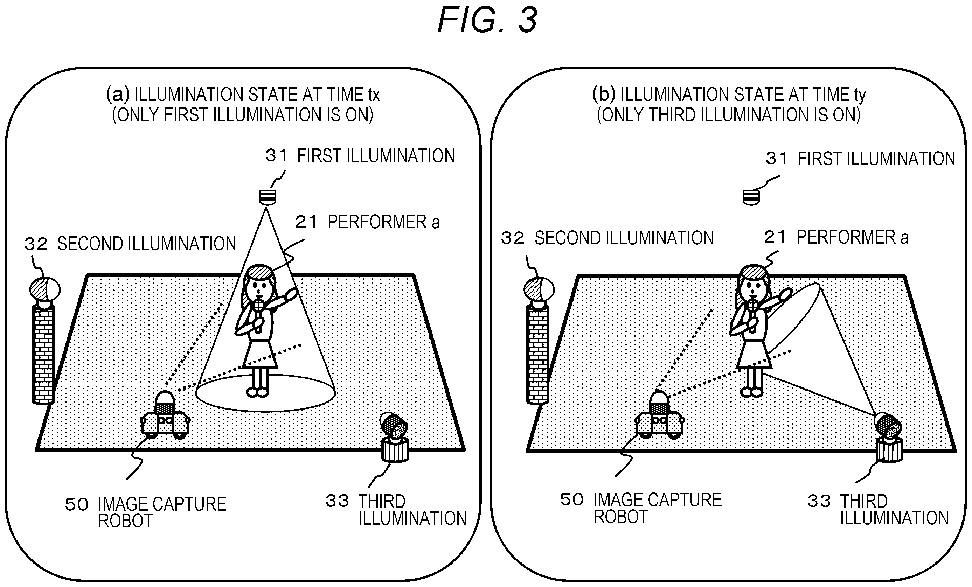

An example of the change in the illumination state for the performer a, 21 as the person to be tracked will be described with reference to Fig. 3. Fig. 3 illustrates examples of the illumination states at two different times below:
(a) the illumination state at the time tx = only the first illumination is ON; and
(b) the illumination state at the time ty = only the third illumination is ON.

The images of the performer a and 21 captured by the image capture robot 50 in the different illumination states (a) and (b) are different images.

It is assumed that the above-described learning processing, that is, the learning processing of acquiring the face image and the feature point information of the performer a, 21 as the object to be tracked (performer to be tracked) in the illumination state illustrated in Fig. 3(a) and storing the acquired information in the storage unit, is performed.

In the case of performing the person identification by the collation processing using the learning data (the feature information acquired from the image of the performer a, 21) stored in the storage unit, if the new captured image for which the person identification is to be performed is the captured image in the same illumination state as the illumination state in which the learning processing has been performed, a matching rate with the learning data (the feature information acquired from the image of the performer a, 21) stored in the storage unit is high, and the performance a, 21 that is the object to be tracked (performer to be tracked) can be discriminated.

However, in a case where the new captured image for which the person identification is to be performed is the captured image in the illumination state different from the illumination state in which the learning processing has been executed, for example, the captured image in "(b) the illumination state at the time ty = only the third illumination is ON", the matching rate with the learning data (the feature information acquired from the image of the performer a, 21) stored in the storage unit is low, and it becomes difficult to discriminate the performer a, 21 who is the object to be tracked (performer to be tracked). That is, there is a high possibility that a collation error occurs.

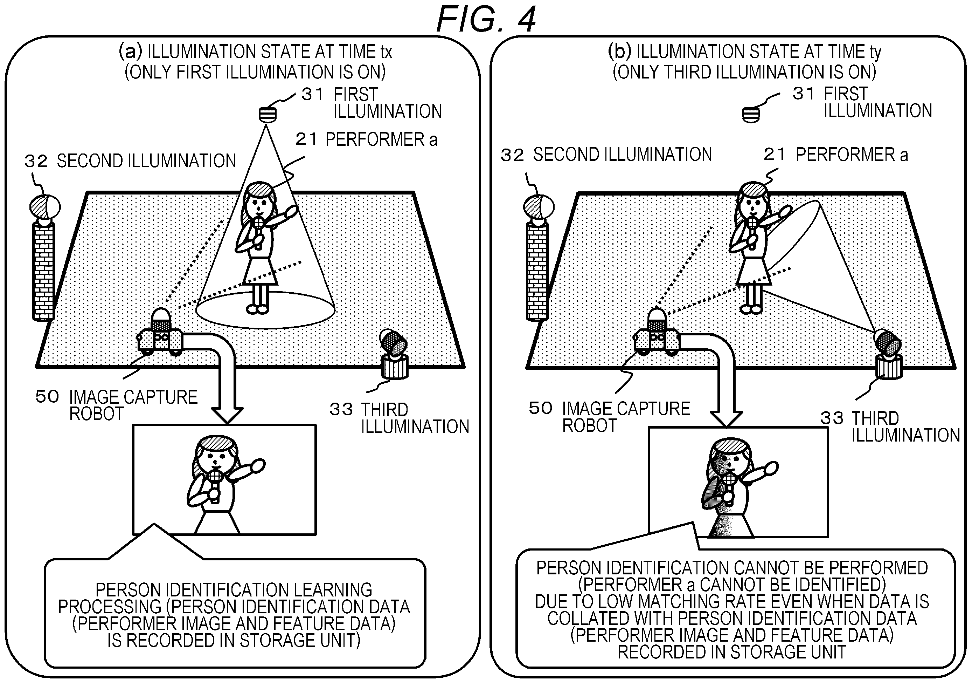

An example of occurrence of the collation error will be described with reference to Fig. 4.

Similarly to Fig. 3, Fig. 4 illustrates examples of the illumination states at two different times below:
(a) the illumination state at the time tx = only the first illumination is ON; and
(b) the illumination state at the time ty = only the third illumination is ON.

The above-described learning processing is performed in the illumination state of (a) illustrated in Fig. 4, that is, the illumination state in which only the first illumination 31 is ON.

The image capture robot 50 captures the image of the performer a, 21 who is the object to be tracked (performer to be tracked) in the state where the performer a, 21 is being irradiated with only the first illumination 31, and acquires object feature information from the captured image and stores the information in the storage unit. That is, the face image, the feature point information, and the like of the performer a, 21 are stored in the storage unit as object identification learning data.

Thereafter, the image capture robot 50 continues image capturing while tracking the performer a, 21 who is the object to be tracked (performer to be tracked).

It is assumed that the illumination state changes to the state illustrated in Fig. 4(b) at the time ty. That is, only the third illumination 33 of blue light is emitted to the performer a, 21.

The information processing device in the image capture robot 50 or an external information processing device communicable with the image capture robot 50 performs the person identification processing of discriminating the performer a, 21 as the object to be tracked (performer to be tracked) from the image of the performer a, 21 captured in the illumination state illustrated in Fig. 4(b).

In the person identification processing, the information processing device performs the collation processing between the feature information (the face image, the feature point information, and the like) acquired from the image of the performer a, 21 captured in the illumination state illustrated in Fig. 4(b) and the learning data stored in the storage unit.

However, the feature information (the face image, the feature point information, and the like) acquired from the image of the performer a, 21 captured in the illumination state illustrated in Fig. 4(b) has many differences from the learning data stored in the storage unit.

This is because the learning data stored in the storage unit is the feature information acquired from the image captured in the illumination state (only the first illumination is ON) illustrated in Fig. 4(a).

As a result, the information processing device cannot determine that the person captured in the image captured in the illumination state illustrated in Fig. 4(b) is the performer a, 21. That is, the correct person identification processing cannot be performed.

In the processing of the present disclosure, processing in consideration of the illumination state is executed in order to prevent erroneous person identification processing and perform highly accurate person identification processing. Hereinafter, a specific example of the processing executed by the information processing device of the present disclosure will be described.

### [2. (Example 1) Example of executing person identification processing in consideration of illumination state]

Next, as Example 1 of the processing executed by the information processing device of the present disclosure, an example of executing the person identification processing in consideration of the illumination state will be described.

Note that the information processing device of the present disclosure is the information processing device inside the image capture robot 50 illustrated in Fig. 1, that is, the image capture robot 50 moving on the stage 10, or the information processing device capable of communicating with the image capture robot 50.

The information processing device performs the person detection processing from the image captured by the image capture robot 50, and further performs the person identification processing. Specifically, for example, it is determined whether or not the person detected from the captured image is the object to be tracked.

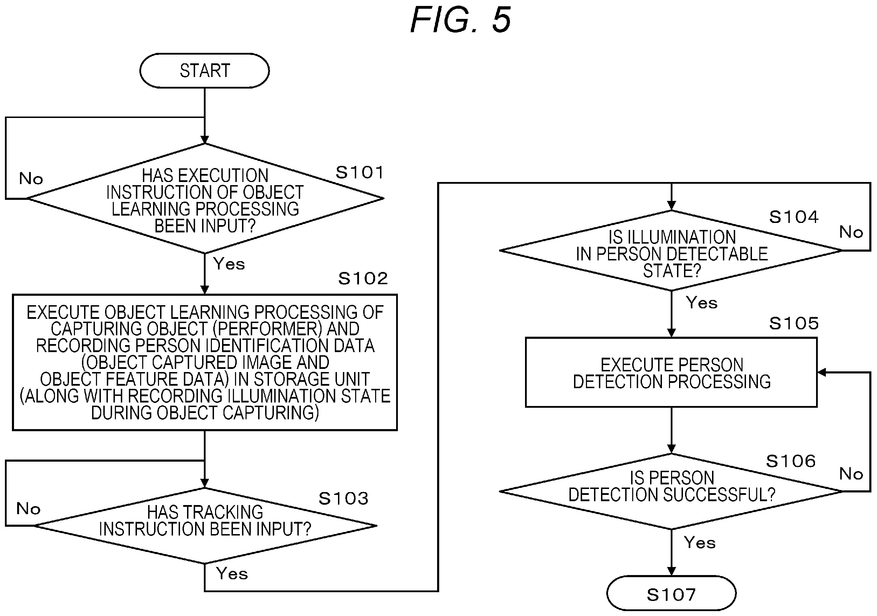

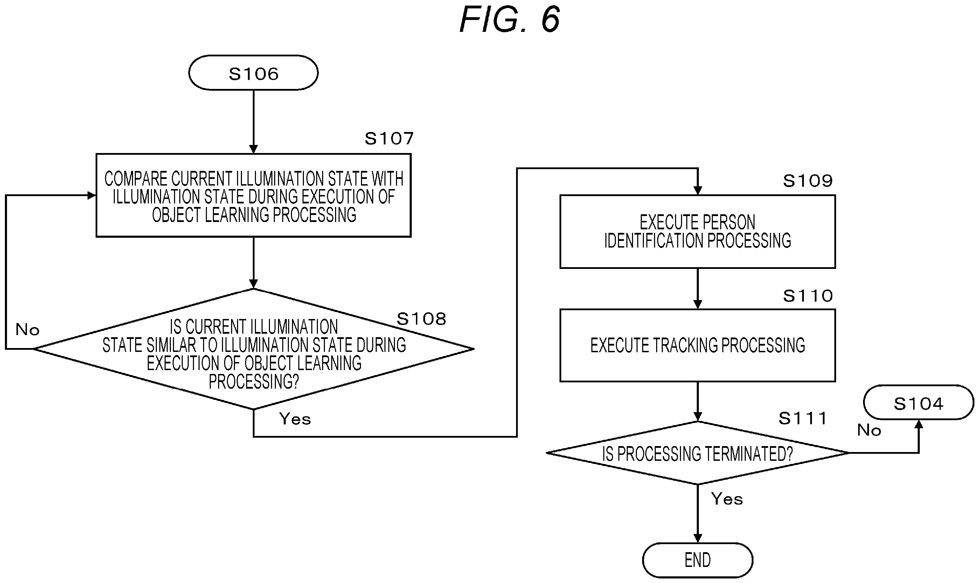

A sequence of the processing (Example 1) executed by the information processing device of the present disclosure will be described with reference to flowcharts illustrated in Figs. 5 and 6.

Note that the processing according to the flows described below can be performed in accordance with, for example, a program stored in the storage unit of the information processing device under, for example, the control of a control unit having a program performance function such as a CPU or the like. Hereinafter, details of processing of each step of the flows illustrated in Figs. 5 and 6 will be sequentially described.

Note that the flows illustrated in Figs. 5 and 6 are, for example, processing executed in the performance execution period after the performance such as the live concert is started on the stage 10 described with reference to Fig. 1.

The pieces of processing of steps S101 and S102 are the object learning processing for the object to be tracked, and are executed immediately after the performance such as the live concert starts.

The processing of step S103 and subsequent processing corresponds to processing of tracking the object to be tracked performed in a performance execution period after the object learning processing of step S102 is completed.

### (step S101)

First, in step S101, the information processing device determines whether or not an instruction to execute object learning processing has been input.

Note that, here, the description will be given on the premise that the information processing device is an information processing device mounted inside the image capture robot 50 illustrated in Fig. 1.

The information processing device inside the image capture robot 50 inputs an instruction to execute object learning processing for the object to be tracked from a communication device outside the robot via a communication unit as an instruction of a user such as an operator.

Specifically, the operator (user) selects one specific performer as the object to be tracked (performer to be tracked) from a plurality of performers on a stage, and inputs performer selection information to the information processing device as the instruction to execute the object learning processing.

In a case where the information processing device detects the input of the instruction to execute the object learning processing in step S101, the processing proceeds to step S102.

### (step S102)

In step S101, in a case where the information processing device inputs an instruction to execute the object learning processing, next, in step S102, the information processing device executes the object learning processing of acquiring the captured image (learning image) of the object (performer) selected as the object to be tracked (performer to be tracked), generating the feature information to be applied to the person identification, for example, the captured image of the object, the feature point information of the object, or the like, from the acquired captured image (learning image), and storing the feature information in the storage unit.

As described above, the camera mounted on the image capture robot 50 captures, for example, an RGB color image (moving image). The information processing device selects one image frame of the RGB color image captured by the camera, acquires the feature information of the object to be tracked (performer to be tracked) from the selected image frame, and stores the feature information in the storage unit.

Note that the information processing device also records, in the storage unit, the illumination state of the image at the time of capturing the image from which the feature information of the object has been acquired, in association with the feature information of the object to be tracked (performer to be tracked).

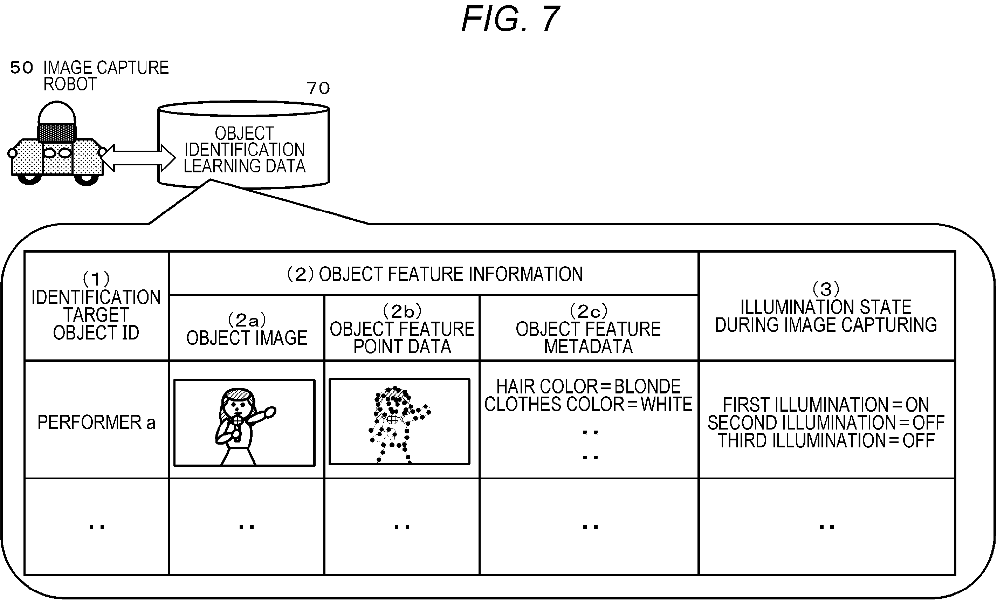

A data configuration example of object identification learning data 70 stored in the storage unit in the object learning processing executed by the information processing device in step S102 will be described with reference to Fig. 7.

As illustrated in Fig. 7, the information processing device executes object learning processing of acquiring the feature information of the object, generates object identification learning data 70, and stores the object identification learning data 70 in the storage unit in the information processing device. Specifically, for example, each data below is stored:
(1) an object to be identified ID;
(2) object feature information (collation feature information); and
(3) the illumination state at the time of capturing an image.

The (2) object feature information (collation feature information) is the object feature information used for collation processing, and includes, for example, the following information:
(2a) an object image;
(2b) object feature point data; and
(2c) object feature metadata.

"The (1) object to be identified ID" is an identifier of the object to be tracked (performer to be tracked).

"The (2) object feature information (collation feature information)" is information applicable to identification of the object, and includes, for example, the (2a) object image, the (2b) object feature point data, and the (2c) object feature metadata.

The "(2a) object image" is image data of the object to be tracked (performer to be tracked) and is extracted from the captured image.

The "(2b) object feature point data" is feature point data extracted from the image data of the object to be tracked (performer to be tracked). For example, a pixel having a large luminance change of a contour of the face, an eye, the nose, pr the mouth is extracted as the feature point.

For example, as illustrated in the drawing, the "(2c) object feature metadata" is metadata indicating a feature of the object to be tracked (performer to be tracked). For example, metadata indicating the object features such as hair color = blonde and clothes color = white are recorded.

Note that the "(2) object feature information (collation feature information)" illustrated in Fig. 7 is an example of information applicable to identification of the object, and other pieces of information may be included. Alternatively, for example, processing of recording only the "(2a) object image" may be configured.

The "(3) illumination state at the time of capturing an image" is data indicating the illumination state at the time of capturing an image used to acquire the feature information of the object to be tracked (performer to be tracked).

In the example illustrated in the drawing, an example in which the following illumination states are recorded is illustrated:
the first illumination = ON;
the second illumination = OFF; and
the third illumination = OFF.

Note that the first illumination to the third illumination are the first illumination 31 to the third illumination 33 illustrated in Fig. 1.

Note that, as described with reference to Fig. 2 above, the illumination ON/OFF control sequences of the first illumination 31 to the third illumination 33 illustrated in Fig. 1 are programmed in advance, and this program data, that is, the ON/OFF control sequence program of each illumination described with reference to Fig. 2 is stored in the storage unit in the information processing device. Alternatively, processing of acquiring the sequences from the illumination control device via the communication unit of the information processing device may be performed.

The information processing device acquires, from the ON/OFF control sequence program, the illumination state (ON/OFF state of each illumination) at timing (t) that coincides with capture timing (t) of the image from which the feature information of the object to be tracked (performer to be tracked) has been acquired, and records the illumination state in the storage unit. That is, "(3) illumination state at the time of capturing an image" data of Fig. 7 is recorded in association with the feature information (each data of (2a) to (2c) illustrated in Fig. 7) of the object to be tracked (performer to be tracked).

As described above, these pieces of processing, that is, the pieces of processing of steps S101 and S102, are the object learning processing for the object to be tracked, and are executed immediately after the performance such as the live concert starts.

The processing of step S103 and subsequent processing corresponds to processing of tracking the object to be tracked performed in a performance execution period after the object learning processing of step S102 is completed.

Hereinafter, each processing in and after step S103 will be described.

### (step S103)

When the object learning processing for the object to be tracked (performer to be tracked) in step S102 is completed, the processing of tracking the object to be tracked (performer to be tracked), that is, the tracking processing, is started in step S103 and subsequent steps.

First, in step S103, the information processing device determines whether or not a tracking start instruction for the object to be tracked (performer to be tracked) has been input.

For example, when the information processing device inside the image capture robot 50 inputs the tracking start instruction for the object to be tracked from the communication device outside the robot via the communication unit as an instruction of the user such as the operator, the processing proceeds to step S104.

### (step S104)

When the tracking start instruction for the object to be tracked (performer to be tracked) is input in step S103, next, in step S104, the information processing device determines whether or not the illumination state is in a person detectable state.

This processing is executed as processing of analyzing the camera-captured image and determining whether or not there is person-detectable illumination, for example. Alternatively, it may be determined by verifying whether or not the illumination for irradiating a camera capture direction area with light is in the ON state with reference to the illumination control sequence described with reference to Fig. 2 above.

In a case where it is determined that the illumination state is the person detectable state, the processing proceeds to step S105.

### (step S105)

In a case where it is determined that the illumination state is the person detectable state in step S104, the information processing device executes the person detection processing in step S105.

As described above, the person detection processing is processing of detecting an image area of a person from a captured image, and is executed by applying, for example, person shape detection processing or face image detection processing using existing pattern matching, or the like.

### (step S106)

Next, in step S106, it is determined whether or not the image area of a person has been detected from the captured image in the person detection processing in step S105.

In a case where the image area of a person has been detected from the captured image, the processing proceeds to step S107.

### (step S107)

When it is determined that the person detection is successful in step S106, next, in step S107, the information processing device executes comparison verification processing of determining whether or not the current illumination state is similar to the illumination state at the time of the object learning processing executed in step S102.

### (step S108)

Next, in step S108, the information processing device determines whether or not the current illumination state is similar to the illumination state at the time of the object learning processing executed in step S102, and in a case where it is determined that the illumination states are similar, the processing proceeds to step S109.

In a case where it is determined that the illumination states are not similar, the processing returns to step S107 and stands by.

As described with reference to Fig. 4 above, the illumination is ON/OFF-controlled according to a predetermined program, and thus the illumination state changes over time.

Therefore, there is a case where the current illumination state and the illumination state at the time of the object learning processing executed in step S102 become similar during a standby time, and in this case, the determination in step S108 is Yes, and the processing proceeds to step S109.

Note that the determination processing as to whether or not the illumination states are similar is performed according to an illumination state similarity determination rule defined in advance.

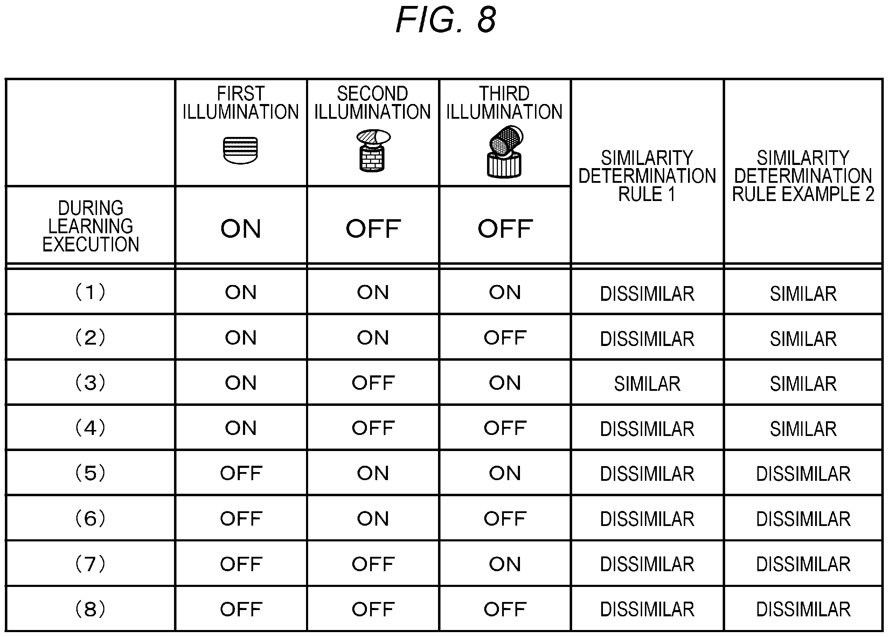

An example of the illumination state similarity determination rule will be described with reference to Fig. 8.

Fig. 8 illustrates various ON/OFF setting states of the first illumination 31, the second illumination 32, and the third illumination 33 described with reference to Fig. 1 above, and two types of similarity determination rules.

As described in the upper part of the table, the illumination states at the time of execution of the learning processing of acquiring and recording the object features are assumed as follows:
the first illumination = ON;
the second illumination = OFF; and
the third illumination = OFF.

Each data of (1) to (8) in the table is data indicating eight states, which are all of combinations of ON/OFF settings of the first illumination 31, the second illumination 32, and the third illumination 33.

The similarity determination rule 1 is a rule in which the illumination state completely matches the ON/OFF settings of the first illumination 31, the second illumination 32, and the third illumination 33 at the time of learning execution, that is, only the entry (3) illustrated in Fig. 8, is determined to be similar, and the other illumination states are all dissimilar.

Furthermore, the similarity determination rule 2 is a rule in which not only the illumination state completely matches the ON/OFF settings of the first illumination 31, the second illumination 32, and the third illumination 33 at the time of learning execution but also cases where the first illumination 31, which has been set to ON at the time of learning execution, is set to ON, that is, all the entries (1) to (4) illustrated in Fig. 8, are determined to be similar, and the illumination states in which the first illumination 31 is set to OFF are dissimilar.

As described above, the similarity determination rule of the illumination state can be set in various manners.

The information processing device determines in advance which rule to apply, and determines whether or not the current illumination state is similar to the illumination state at the time of executing the learning processing according to the determined rule.

Next, in step S108, in a case where it is determined that the current illumination state is similar to the illumination state at the time of the object learning processing executed in step S102, the processing proceeds to step S109.

### (step S109)

In the case where it is determined that the current illumination state is similar to the illumination state at the time of executing the object learning processing, the information processing device executes the person identification processing in step S109.

As described above, the person identification processing is processing of identifying who the person detected from the captured image is. In the present example, processing of determining whether or not the detected person is the performer selected as the tracking target, that is, the object to be tracked (performer to be tracked), is executed.

This person identification processing is executed by collation processing between the feature data of the person detected from the currently captured image and feature data of the object to be tracked stored in the storage unit by the above-described learning processing.

The information processing device of the present disclosure executes the person identification processing in step S109 only in the case where it is determined that the current illumination state is similar to the illumination state at the time of executing the object learning processing in step S108.

The feature data of the object to be tracked stored in the storage unit is the feature data acquired in the specific illumination state at the time of executing the learning processing, for example, the following illumination states:
the first illumination = ON;
the second illumination = OFF; and
the third illumination = OFF.

Meanwhile, it is guaranteed that the illumination state at the time of executing the person identification processing in step S109 is also an illumination state similar to the illumination state at the time of executing the above learning processing.

Therefore, the object feature information such as the person image acquired from the captured image at the time of executing the person identification processing in step S109 has a high probability of being feature information that matches the feature information acquired under an illumination state similar to that at the time of the learning processing and stored in the storage unit.

As a result, the feature information collation processing can be performed with high accuracy, and the highly accurate object identification processing is implemented.

### (step S110)

When the person identification processing in step S109 ends, the information processing device executes the processing of tracking the object to be identified in step S110.

### (step S111)

Finally, in step S111, it is determined whether or not to terminate the processing. In a case of terminating the processing, the process is terminated. In a case of continuing the processing, the process returns to step S104, and the person detection processing and the subsequent processing are repeated.

As described above, in the case of performing the person identification processing, the information processing device according to the present disclosure determines whether or not the illumination state at the time of executing the person identification processing is similar to the illumination state at the time of the learning processing executed in advance, that is, at the time of executing the learning processing where the feature information of the person to be identified has been acquired, and executes the person identification processing only in the case where the illuminations are similar.

By performing such processing, the highly accurate feature information collation processing becomes possible, and the highly accurate object identification processing is implemented.

Note that, in a case where the determination of No is made in step S108 in the above-described processing sequence, that is, in a case where it is determined that the current illumination state is not similar to the illumination state at the time of the object learning processing executed in step S102, the above description has been made that the person identification processing is not executed and the processing returns to step S107.

Other than such processing, for example, even in the case where the determination of No is made in step S108, that is, even in the case where it is determined that the current illumination state is not similar to the illumination state at the time of executing the object learning processing, the person identification processing may be executed under the current illumination state for the time being, and the execution result may not be used.

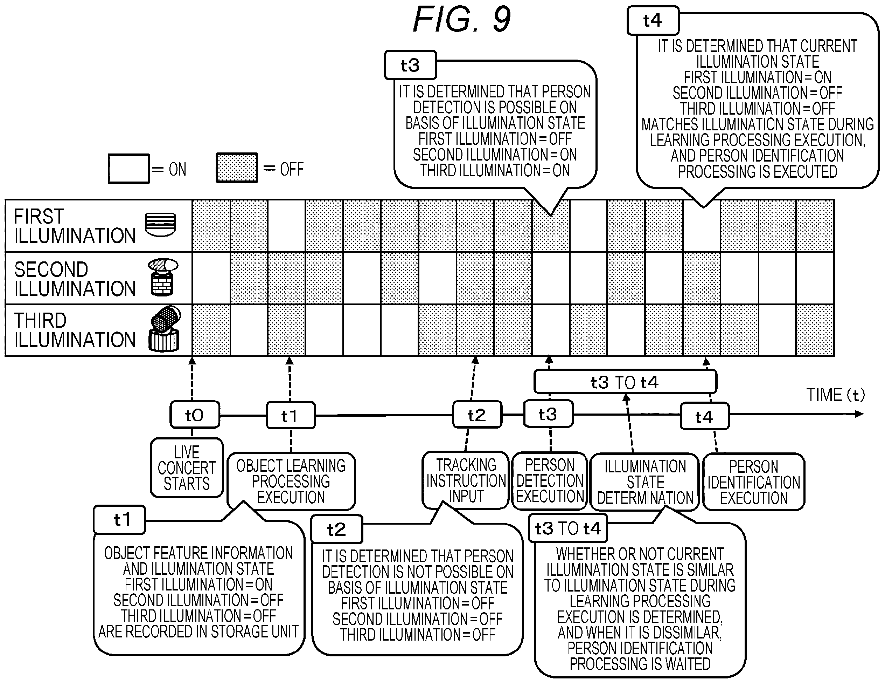

A specific example of the processing described with reference to the flowcharts illustrated in Figs. 5 and 6 will be described with reference to Fig. 9.

Fig. 9 is a diagram illustrating the ON/OFF control sequences in the performance execution period of each of the first illumination 31, the second illumination 32, and the third illumination 33 described with reference to Fig. 1 above, and the execution timing of the processing described with reference to the flowcharts illustrated in Figs. 5 and 6.

The time (t) passes from left to right.

A performance such as a live concert starts at the time t0.

For example, the live concert is performed by the set of three performer described with reference to Fig. 1.

Next, at the time t1, the feature information acquisition processing for the specific object to be tracked (performer to be tracked), that is, the object learning processing is executed.

In the object learning processing, the feature information of the specific object to be tracked (performer to be tracked) and the illumination states (the first illumination = ON, the second illumination = OFF, and the third illumination = OFF) at the time of executing the learning processing are stored together in the storage unit.

Specifically, for example, the data illustrated in Fig. 7 described above is stored in the storage unit.

Next, at the time t2, the tracking instruction is input. At this time, since the first illumination to the third illumination are all OFF, it is determined that person detection is impossible and the person detection is not started, and the standby state is set.

Thereafter, at the time t3, the second illumination and the third illumination are turned ON. At this point, the information processing device determines that the person detection is possible, and executes the person detection processing.

When the person detection processing is completed, the processing can shift to the person identification processing. The information processing device checks what state the illumination state is. That is, it is determined whether or not the illumination state is similar to the illumination state at the time of executing the learning processing (time = t1) .

Note that, here, it is assumed that the rule for determining that the illumination states are similar only in the case where the illumination state completely matches the illumination state at the time of executing the learning processing (the first illumination = ON, the second illumination = OFF, and the third illumination = OFF) is applied.

At the time t4 after the time t3, the illumination state completely matches the illumination state at the time of executing the learning processing (the first illumination = ON, the second illumination = OFF, and the third illumination = OFF).

At this time t4, the information processing device executes the person identification processing.

The person detection processing and the person identification processing are executed in such a sequence.

The person detection processing is executed only in the illumination state where the person detection is possible, and the person identification processing is executed under the illumination state similar to the illumination state at the time of the learning processing executed in advance.

With these pieces of processing, both the person detection processing and the person identification processing can be reliably and highly accurately performed.

### [3. (Example 2) Example of executing plurality of pieces of learning processing under plurality of different illumination states]

Next, an example of executing a plurality of pieces of learning processing under a plurality of different illumination states will be described.

In Example 1 described above, an example in which the object learning processing of acquiring the feature information of the object and storing the feature information in the storage unit is performed once under one illumination state has been described. However, for example, the learning processing may be performed a plurality of times under different illumination states.

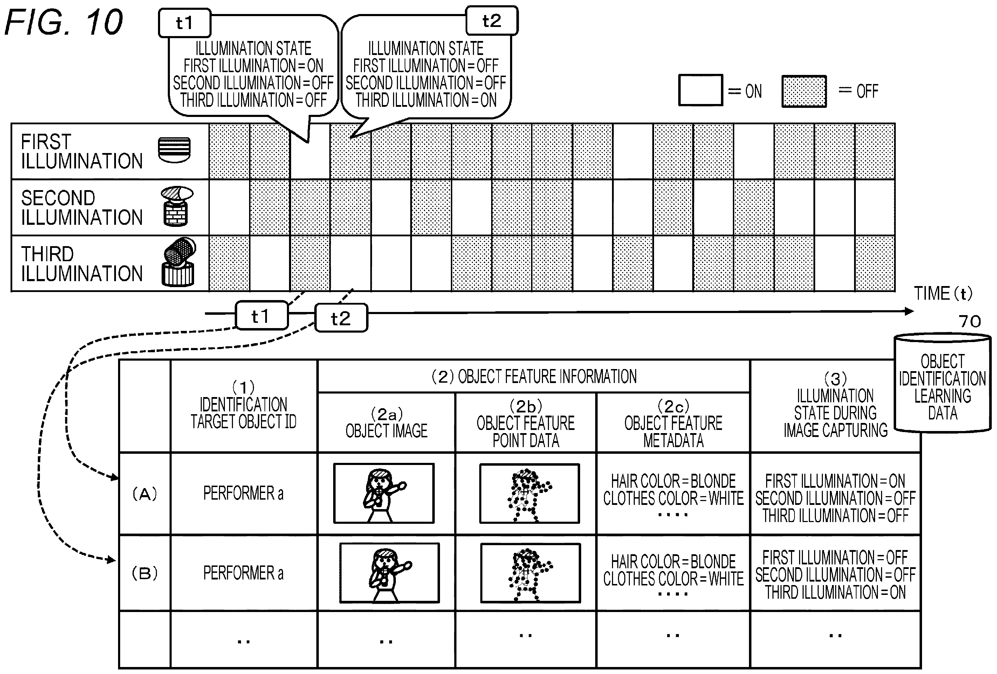

An example of acquiring and recording the learning data in the case of performing such processing will be described with reference to Fig. 10.

The upper part of Fig. 10 illustrates illumination control sequences similar to those of Fig. 9 described above.

That is, the ON/OFF control sequence in the performance execution period of each of the first illumination 31, the second illumination 32, and the third illumination 33 described with reference to Fig. 1 is illustrated.

The lower part of Fig. 10 illustrates an example of the object identification learning data 70 stored in the storage unit similar to that described with reference to Fig. 7 above.

As described with reference to Fig. 7, the information processing device executes the object learning processing of acquiring the feature information of the object, generates the object identification learning data 70, and stores the object identification learning data 70 in the storage unit in the information processing device. Specifically, for example, each data below is stored:
(1) an object to be identified ID;
(2) object feature information (collation feature information); and
(3) the illumination state at the time of capturing an image.

(2) The object feature information (collation feature information) includes, for example, the following information:
(2a) an object image;
(2b) object feature point data; and
(2c) object feature metadata.

In the example illustrated in Fig. 10, a plurality of pieces of the learning processing is performed in the different illumination states at the time t1 and the time t2, and the object feature information acquired in the plurality of pieces of learning processing and the illumination states at that time are associated with each other and recorded as the object identification learning data 70.

The entry (A) of the object identification learning data 70 illustrated in the lower part of Fig. 10 is an entry of the learning data executed at the time t1, and is an entry where the feature information of the object in the following illumination state and the illumination state at the time of the acquisition are recorded in association with each other:
the first illumination = ON;
the second illumination = OFF; and
the third illumination = OFF.

Moreover, the next entry (B) is an entry of the learning data executed at the time t2, and is an entry where the feature information of the object in the following illumination state and the illumination state at the time of the acquisition are recorded in association with each other:
the first illumination = OFF;
the second illumination = OFF; and
the third illumination = ON.

Under such different illumination states, the learning processing is executed a plurality of times, and the object feature information obtained in each of the different illumination states is stored in the storage unit.

Thereafter, in the case where the information processing device executes the person identification processing, the person identification processing can be executed at the timing when the illumination state becomes one of the illumination state (the first illumination = ON, the second illumination = OFF, and the third illumination = OFF) of the entry (A) and the illumination state (the first illumination = OFF, the second illumination = OFF, and the third illumination = ON) of the entry (B).

For example, in the case that the person identification processing is performed in an illumination state similar to the illumination state (the first illumination = ON, the second illumination = OFF, and the third illumination = OFF) of the entry (A), the collation processing using the object feature information of the entry (A) is executed.

Furthermore, in the case that the person identification processing is performed in an illumination state similar to the illumination state (the first illumination = OFF, the second illumination = OFF, and the third illumination = ON) of the entry (B), the collation processing using the object feature information of the entry (B) is executed.

In this way, by generating and storing the learning data in which the object feature information associated with the plurality of different illumination states is recorded, it is possible to execute the highly accurate person identification processing under various illumination states.

### [4. (Example 3) Example of executing person identification processing in consideration of position of image capture robot]

Next, as Example 3, an example of executing the person identification processing in consideration of the position of the image capture robot will be described.

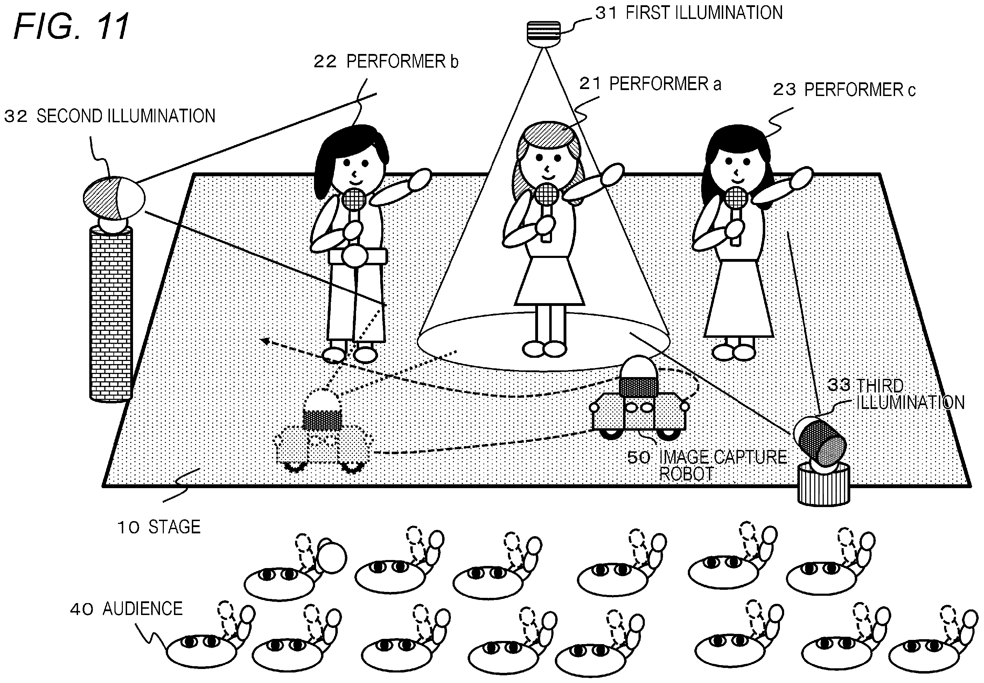

As illustrated in Fig. 11, the image capture robot 50 equipped with a camera captures an image while moving on the stage 10.

For example, in the case where the object to be tracked is the performer a, 21, the image capture robot 50 captures the performer a, 21 as the object to be tracked from various directions such as capturing the performer a, 21 from the left side at certain time t1, and capturing the performer a, 21 from the right side at certain time t2.

For example, in the case of executing the learning processing of acquiring the feature information of the performer a, 21 as the object to be tracked and storing the feature information in the storage unit on the basis of the image obtained by capturing the performer a, 21 from the left side at the time t1, the object identification learning data stored in the storage unit includes the image obtained by capturing the performer a, 21 from the left side and the feature information obtained from the image.

However, thereafter, in a case of performing the person identification processing for the performer a, 21 at the time t2, the image of the performer a, 21 obtained at the time t2 is an image obtained by capturing the performer a, 21 from the right side.

The object feature information obtained from the image obtained by capturing the performer a, 21 from the right side decreases in the matching rate with the object feature information (the object feature information obtained from the image obtained by capturing the performer a, 21 from the left side) stored in the storage unit. As a result, it may be difficult to determine that the object is the performer a, 21.

Example 3 described below is an example that enables prevention of such situation, and is an example of executing the person identification processing in consideration of the position of the image capture robot 50.

The image capture robot 50 moves on the stage 10 according to a program created in advance during a performance period such as a live concert. That is, the image capture robot 50 moves on the stage according to a predetermined trajectory (movement route) from the start to the end of the performance.

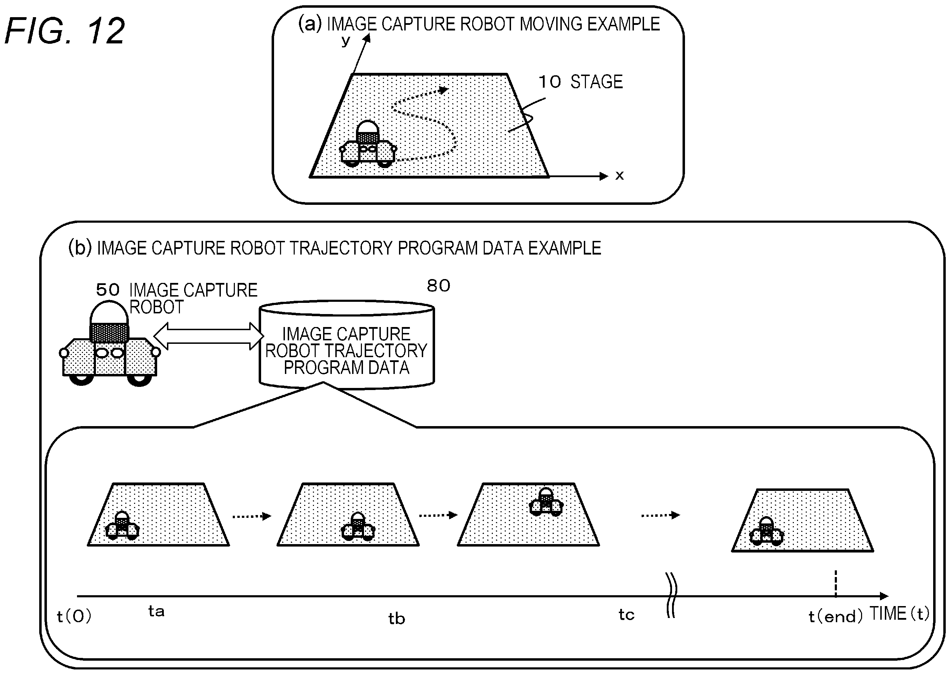

An example of a trajectory program is illustrated in Fig. 12. For example, as illustrated in Fig. 12(a), the plane of the stage 10 is set as an xy plane.

Fig. 12(b) illustrates an example of image capture robot trajectory program data 80 stored in the storage unit of the information processing device in the image capture robot 50, for example.

As illustrated in Fig. 12(b), the position (x, y) of the image capture robot 50 from the start to the end of the performance is recorded in the trajectory program data, and the image capture robot 50 moves on the stage according to the trajectory program.

This trajectory program is stored in the storage unit of the information processing device in the image capture robot 50 or in the storage unit of the information processing device communicable with the image capture robot 50, and the image capture robot 50 moves on the stage according to the trajectory program.

The position of the image capture robot 50 at any time tx in the performance execution period is predetermined according to the trajectory program, and a future robot position can also be acquired.

In the present example, the person identification processing for the object to be tracked is executed in a case where the robot is located at a substantially same position as the robot position at the time of executing the learning processing of acquiring the feature information of the object to be tracked and storing the feature information in the storage unit.

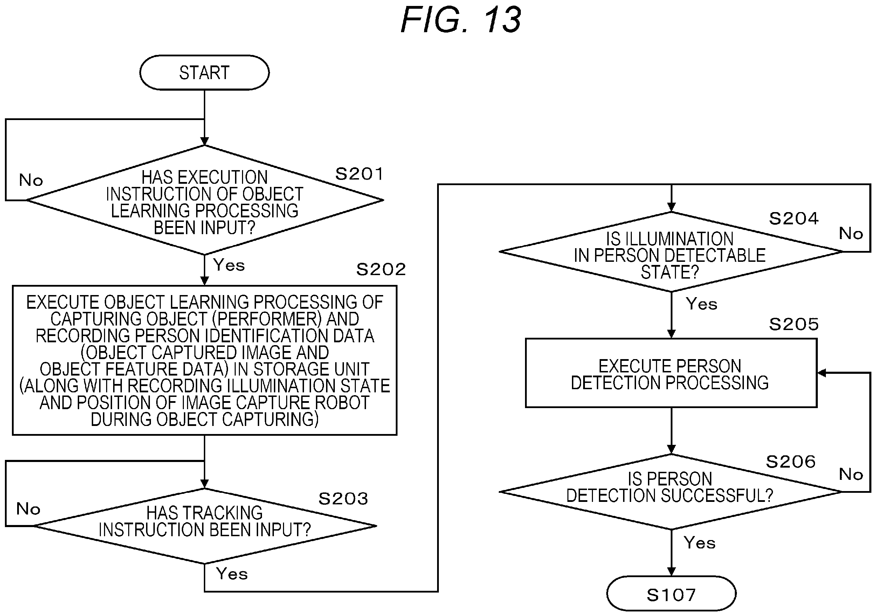

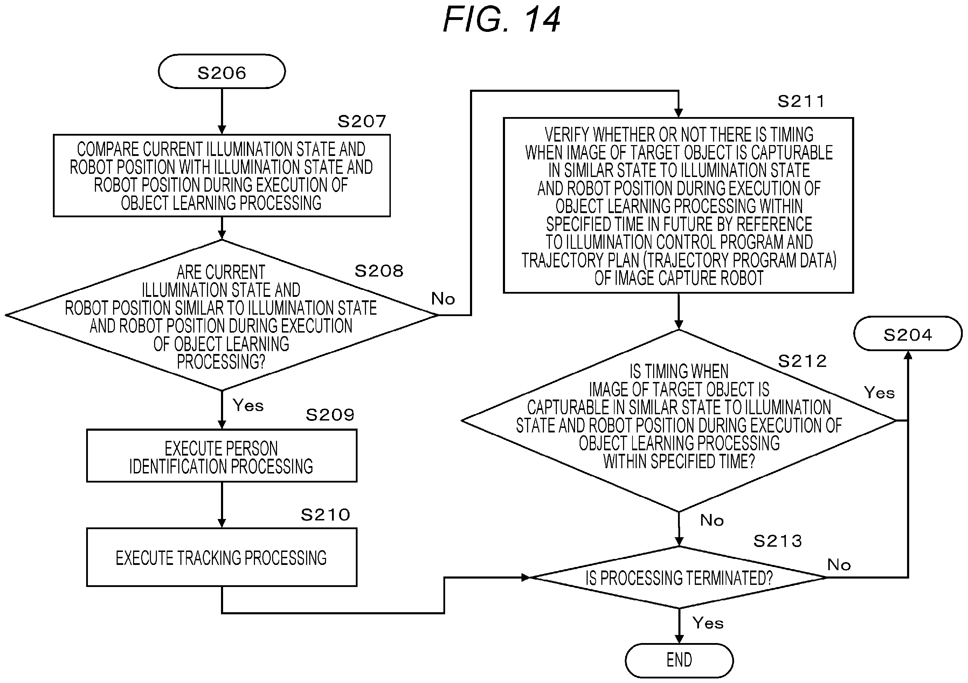

Hereinafter, a processing sequence according to the present example will be described with reference to the flowcharts illustrated in Figs. 13 and 14.

The processing according to the flows described below can be performed in accordance with, for example, a program stored in the storage unit of the information processing device under, for example, the control of the control unit having the program performance function such as a CPU or the like.

Note that the flows illustrated in Figs. 13 and 14 are, for example, processing executed within the performance execution period after the performance such as the live concert is started on the stage 10 described with reference to Fig. 1.

The pieces of processing of steps S201 and S202 are the object learning processing for the object to be tracked, and are executed immediately after the performance such as the live concert is started.

The processing of S203 and subsequent processing corresponds to the processing of tracking the object to be tracked performed in the performance execution period after the object learning processing of step S202 is completed.

### (step S201)

First, in step S201, the information processing device determines whether or not the instruction to execute the object learning processing has been input.

Note that, here, the description will be given on the premise that the information processing device is an information processing device mounted inside the image capture robot 50 illustrated in Fig. 1.

The information processing device inside the image capture robot 50 inputs an instruction to execute object learning processing for the object to be tracked from a communication device outside the robot via a communication unit as an instruction of a user such as an operator.

Specifically, the operator (user) selects one specific performer as the object to be tracked (performer to be tracked) from a plurality of performers on a stage, and inputs performer selection information to the information processing device as the instruction to execute the object learning processing.

In the case where the information processing device detects the input of the instruction to execute the object learning processing in step S201, the processing proceeds to step S202.

### (step S202)

In step S201, in the case where the information processing device inputs the instruction to execute the object learning processing, next, in step S202, the information processing device executes the object learning processing of acquiring the captured image (learning image) of the object (performer) selected as the object to be tracked (performer to be tracked), generating the feature information to be applied to the person identification, for example, the captured image of the object, the feature point information of the object, or the like, from the acquired captured image (learning image), and storing the feature information in the storage unit.

As described above, the camera mounted on the image capture robot 50 captures, for example, an RGB color image (moving image). The information processing device selects one image frame of the RGB color image captured by the camera, acquires the feature information of the object to be tracked (performer to be tracked) from the selected image frame, and stores the feature information in the storage unit.

Note that the information processing device also records, in the storage unit, the illumination state of the image at the time of capturing the image from which the feature information of the object has been acquired, and the position information of the image capture robot, in association with the feature information of the object to be tracked (performer to be tracked).

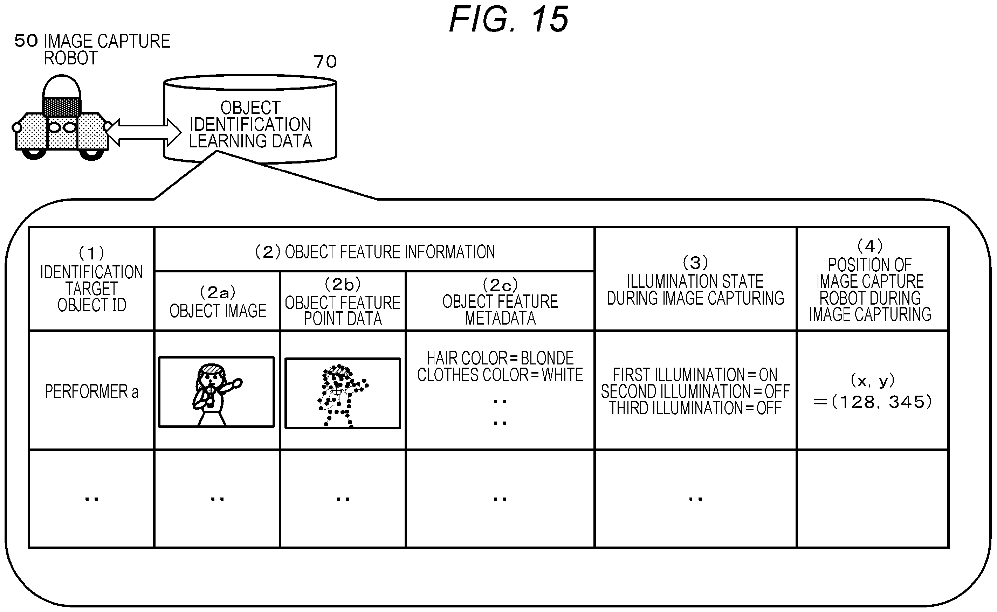

A data configuration example of the object identification learning data 70 stored in the storage unit in the object learning processing executed by the information processing device in step S202 will be described with reference to Fig. 15.

As illustrated in Fig. 15, the information processing device executes the object learning processing of acquiring the feature information of the object, generates the object identification learning data 70, and stores the object identification learning data 70 in the storage unit in the information processing device. Specifically, for example, each data below is stored:
(1) an object to be identified ID;
(2) object feature information (collation feature information); and
(3) the illumination state at the time of capturing an image.
(4) the position of the image capture robot at the time of capturing the image

Each data of (1) to (3) is data similar to that described with reference to Fig. 7 above in Example 1.

In the present example, "(4) the position of the image capture robot at the time of capturing the image" is further recorded in the storage unit in association with each data of (1) to (3) described above.

The "(4) position of the image capture robot at the time of image capturing" is, for example, coordinate data (x, y) indicating the position of the image capture robot on the stage described with reference to Fig. 13 above.

In the present example, the information processing device acquires, from the image capture robot trajectory program data 80, the robot position (x, y) at the timing (t) that coincides with the capture timing (t) of the image from which the feature information of the object to be tracked (performer to be tracked) has been acquired, and records the robot position in the storage unit in association with the object feature information.

Note that, in the present example, the illumination state (ON/OFF state of each illumination) at the timing (t) coincident with the capture timing (t) of the image from which the feature information of the object to be tracked (performer to be tracked) has been acquired is also acquired from the ON/OFF control sequence program and recorded in the storage unit, similarly to Example 1.

As described above, these pieces of processing, that is, the pieces of processing of steps S201 and S202, are the object learning processing for the object to be tracked, and are executed immediately after the performance such as the live concert starts.

The processing of S203 and subsequent processing corresponds to the processing of tracking the object to be tracked performed in the performance execution period after the object learning processing of step S202 is completed.

Hereinafter, each processing in and after step S203 will be described.

The processing of steps S203 to S206 is similar to the processing of steps S102 to S106 described with reference to Fig. 5 in Example 1, and thus will be briefly described.

### (step S203)

When the object learning processing for the object to be tracked (performer to be tracked) in step S202 is completed, in step S203, it is determined whether or not the tracking start instruction for the object to be tracked (performer to be tracked) has been input.

### (step S204)

When the tracking start instruction for the object to be tracked (performer to be tracked) is input in step S203, next, in step S204, the information processing device determines whether or not the illumination state is in a person detectable state.

### (step S205)

In a case where it is determined that the illumination state is the person detectable state in step S204, the information processing device executes the person detection processing in step S205.

As described above, the person detection processing is processing of detecting an image area of a person from a captured image, and is executed by applying, for example, person shape detection processing or face image detection processing using existing pattern matching, or the like.

### (step S206)

Next, in step S206, it is determined whether or not the image area of a person has been detected from the captured image in the person detection processing in step S205.

In a case where the image area of a person has been detected from the captured image, the processing proceeds to step S207.

### (step S207)

When it is determined that the person detection is successful in step S206, next, in step S207, the information processing device executes the comparison verification processing of determining whether or not the current illumination state and the robot position are similar to the illumination state and the robot position at the time of the object learning processing executed in step S202.

### (step S208)

Next, in step S208, the information processing device determines whether or not the current illumination state and the robot position are similar to the illumination state and the robot position at the time of the object learning processing executed in step S202, and in a case where it is determined that the illumination states and the robot positions are similar, the processing proceeds to step S209.

Note that, in a case where it is determined that they are not similar, the processing proceeds to step S211.

Note that the determination processing as to whether or not the illumination states are similar is performed according to an illumination state similarity determination rule defined in advance. For example, the determination is made according to the illumination state similarity determination rule with reference to Fig. 8.

Furthermore, as to whether or not the robot positions are similar, determination processing of determining that the robot positions are similar when a difference between the current robot position and the robot position at the time of executing the object learning processing is within a predetermined threshold, or the robot positions are dissimilar when the difference is larger than the threshold, is performed.

### (step S209)

In the case where it is determined that the current illumination state and the robot position are similar to the illumination state and the robot position at the time of executing the object learning processing, the information processing device executes the person identification processing in step S209.

As described above, the person identification processing is processing of identifying who the person detected from the captured image is. In the present example, processing of determining whether or not the detected person is the performer selected as the tracking target, that is, the object to be tracked (performer to be tracked), is executed.

This person identification processing is executed by collation processing between the feature data of the person detected from the currently captured image and feature data of the object to be tracked stored in the storage unit by the above-described learning processing.

The information processing device of the present disclosure executes the person identification processing in step S209 only in the case where it is determined that the current illumination state and the robot position are similar to the illumination state and the robot position at the time of executing the object learning processing in step S208.

Therefore, the object feature information such as the person image acquired from the captured image at the time of executing the person identification processing in step S209 has a high probability of being feature information that matches the feature information acquired in an illumination state and the robot position similar to that at the time of the learning processing and stored in the storage unit.

As a result, the feature information collation processing can be performed with high accuracy, and the highly accurate object identification processing is implemented.

### (step S210)

When the person identification processing in step S209 ends, the information processing device executes the processing of tracking the object to be identified in step S210.

### (step S211)

On the other hand, in step S208, in the case where it is determined that the current illumination state and the robot position are dissimilar to the illumination state and the robot position at the time of executing the object learning processing, the information processing device executes the processing in step S211.

In step S211, the information processing device refers to, for example, the illumination control program and the trajectory plan (trajectory program data) of the image capture robot stored in the storage unit of the information processing device, and verifies whether or not there is timing at which an image of the target object can be captured in a state similar to the illumination state and the robot position at the time of executing the object learning processing within a specified time in the future.

### (step S212)

step S212 is branch processing based on a result of the verification processing of step S211.

In a case where it is determined that there is timing at which an image of the target object can be captured in a state similar to the illumination state and the robot position at the time of executing the object learning processing within the specified time in the future, the processing returns to step S204, and the person detection and the person identification processing are repeated.

Thereafter, when a state similar to the illumination state and the robot position at the time of executing the object learning processing occurs within the specified time, Yes is determined in the determination processing of step S208, and the person identification processing is executed in step S209.

### (step S213)

During execution of the tracking processing in step S210, or in a case where it is determined in step S212 that there is no timing at which the image of the target object can be captured in a state similar to the illumination state and the robot position at the time of executing the object learning processing within the specified time in the future, the processing proceeds to step S213.

In step S213, it is determined whether or not to terminate the processing. In a case of terminating the processing, the process is terminated. In a case of continuing the processing, the process returns to step S204, and the person detection processing and the subsequent processing are repeated.

As described above, in the present example, in the case of performing the person identification processing, it is determined whether or not the illumination state and the robot position at the time of executing the person identification processing are similar to the illumination state and the robot position at the time of the learning processing executed in advance, that is, at the time of executing the learning processing where the feature information of the person to be identified has been acquired, and executes the person identification processing only in the case where the illumination states and the robot positions are similar.

By performing such processing, the highly accurate feature information collation processing becomes possible, and the highly accurate object identification processing is implemented.

### [5. Other examples]

Next, other examples will be described.

The following examples will be sequentially described.
(Example 4) Example of revising trajectory of image capture robot
(Example 5) Example of performing processing of correcting captured image and executing person identification processing
(Example 6) Example of executing person identification processing in consideration of various state changes on stage

### (5-1. (Example 4) Example of revising trajectory of image capture robot)

First, as Example 4, an example of revising a trajectory of the image capture robot will be described.

As described with reference to Fig. 12 above, the image capture robot 50 moves on the stage according to the trajectory program created in advance.

The trajectory program is stored in the storage unit of the information processing device in the image capture robot 50 or in the storage unit of the information processing device communicable with the image capture robot 50, and the image capture robot 50 moves on the stage according to the trajectory program.

The position of the image capture robot 50 at any time tx in the performance execution period is predetermined according to the trajectory program, and a future robot position can also be acquired.

In Example 3 described with reference to Figs. 13 to 15 above, the person identification processing is executed when the current position of the robot is determined to be a position similar to the position at the time of executing the learning processing in which the object feature information has been acquired.

That is, in step S208 of the flow illustrated in Fig. 14 described above, it is determined whether or not the current position of the image capture robot 50 is a position similar to the position at the time of executing the learning processing, and the person identification processing is executed in step S209 in the case where it is determined that the current position is the similar position.

Furthermore, in the case where the current position of the image capture robot 50 is a position not similar to the position at the time of executing the learning processing, it is verified whether or not there is timing at which the image of the target object can be captured in a state similar to the illumination state and the robot position at the time of executing the object learning processing within the specified time in the future with reference to the trajectory plan (trajectory program data) of the image capture robot in steps S211 and S212. In a case where it is determined that there is the timing, the processing returns to step S204, and processing of repeating the person detection and the person identification processing is performed.

However, in step S212, in a case where it is determined that there is no timing at which the image of the target object can be captured in a state similar to the illumination state and the robot position at the time of executing the object learning processing within the specified time in the future, the subsequent tracking processing has to be stopped.

In the present example, in such a case, processing of revising the trajectory of the image capture robot and setting the timing at which the image of the target object can be captured in a state similar to the illumination state and the robot position at the time of executing the object learning processing is performed.

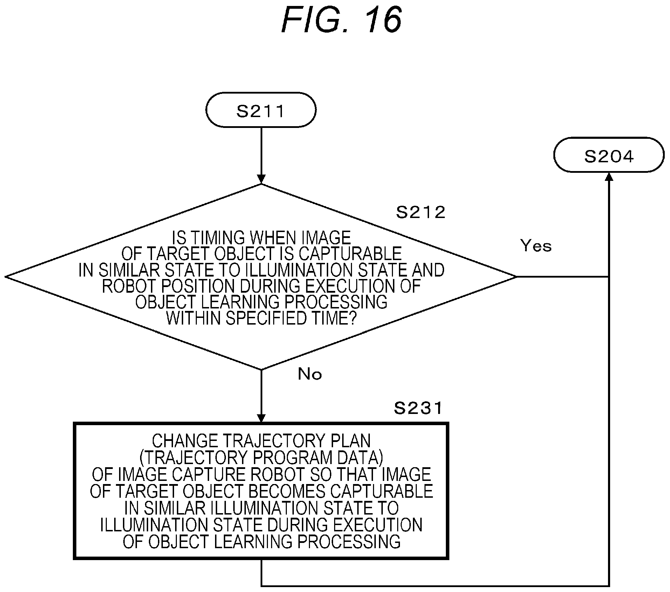

A processing sequence according to present Example 4 will be described with reference to the flowchart illustrated in Fig. 16.

The flow illustrated in Fig. 16 is a flowchart obtained by revising the flowchart of Example 3 described above, that is, the processing of and after step S212 of the flows illustrated in Figs. 13 and 14.

The processing of steps S201 to S211 described in Example 3 is similarly executed in Example 4.

In present Example 4, in the case where it is determined in step S212 that there is no timing at which the image of the target object can be captured in a state similar to the illumination state and the robot position at the time of executing the object learning processing within the specified time in the future, the processing of step S231 illustrated in Fig. 16 is executed.

Processing in step S231 will be described.

### (step S231)

In step S212, in the case where it is determined that there is no timing at which the image of the target object can be captured in a state similar to the illumination state and the robot position at the time of executing the object learning processing within the specified time in the future, the information processing device executes the processing of step S231.

In step S231, the information processing device acquires the trajectory program stored in the storage unit of the information processing device and revises the track program.

That is, processing of changing the trajectory plan (trajectory program data) of the image capture robot is executed so that the target object image can be captured in an illumination state similar to the illumination state at the time of executing the object learning processing.

Thereafter, the processing returns to step S204 and the person detection processing and the person identification processing are executed.

With the change of the trajectory plan, Yes is determined in the determination processing of step S208, and the person identification processing is executed in step S209.

That is, the illumination state and the robot position are set to be similar to the illumination state and the robot position at the time of executing the object learning processing, and the person identification processing is executed in step S209.

As a result, processing of acquiring similar object feature data to that at the time of executing the learning processing can be performed, and the highly accurate person identification processing can be performed.

### (5-2. (Example 5) Example of performing processing of correcting captured image and executing person identification processing)

Next, as Example 5, an example of performing captured image correction processing and executing the person identification processing will be described.

The present example is an example of executing processing of correcting an image captured under an illumination condition not similar to an illumination condition at the time of executing the learning processing to generate a corrected image, and executing the person identification processing using the generated corrected image.

The image correction processing is executed as processing of correcting an image captured under an illumination condition not similar to the illumination condition at the time of executing the learning processing to an image similar to the image captured under the illumination condition at the time of executing the learning processing.

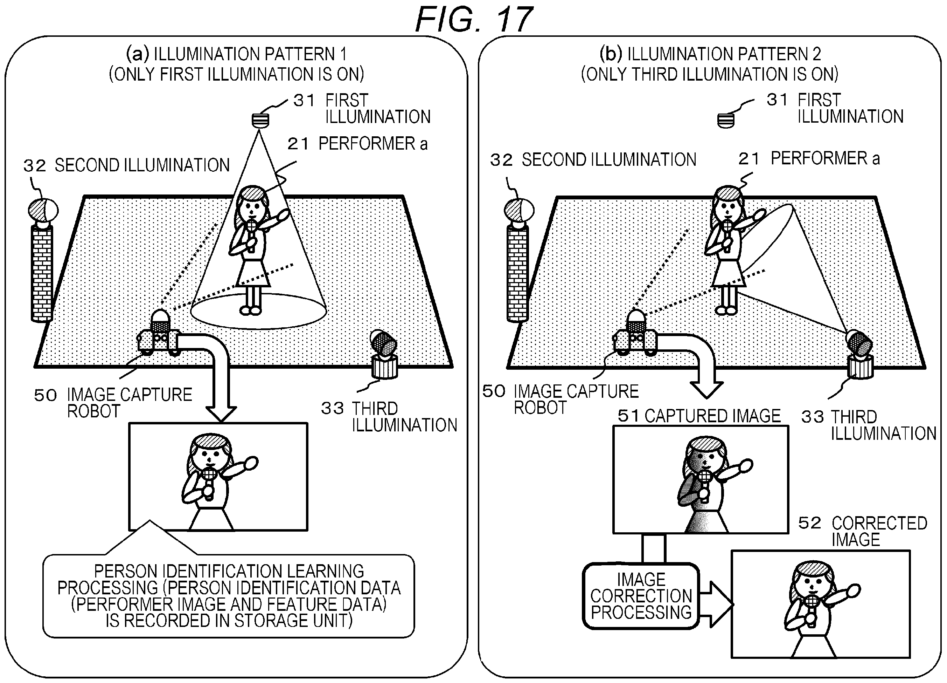

A specific example of the image correction processing will be described with reference to Fig. 17.

For example, it is assumed that illumination pattern 1 (only the first illumination is ON) illustrated in Fig. 17(a) is the illumination state at the time of executing the learning processing in which the object feature information has been acquired.

Furthermore, it is assumed that illumination pattern 2 (only the third illumination is ON) illustrated in Fig. 17(b) is the illumination state at the time of capturing the image at the person identification processing execution timing.

The image captured with the illumination pattern 2 (only the third illumination is ON) illustrated in Fig. 17(b) is a captured image 51 illustrated in Fig. 17(b).

The captured image 51 is an image in which only a side irradiated with the light of the third illumination 33 is bright.

The image is different from the image captured in the illumination state in which only the first illumination is ON illustrated in Fig. 17(a) at the time of executing the learning processing, and the object feature information acquired from the captured image 51 is different from the feature information acquired in the illumination state at the time of executing the learning processing and stored in the storage unit, and there is a high possibility that the object identification processing based on the collation of the feature information will be an error.

Therefore, in the present example, the image correction processing for the captured image 51 is executed. As illustrated in Fig. 17, the captured image 51 is corrected to generate a corrected image 52.

This image correction processing is executed as processing of correcting the captured image 51 to an image similar to that captured under the illumination condition at the time of executing the learning processing.

The feature information is acquired using the corrected image 52 obtained by the correction processing, and the person identification processing is performed by performing the collation processing between the acquired feature information and the feature information stored in the storage unit.

With such processing, it is possible to perform highly accurate person identification processing.

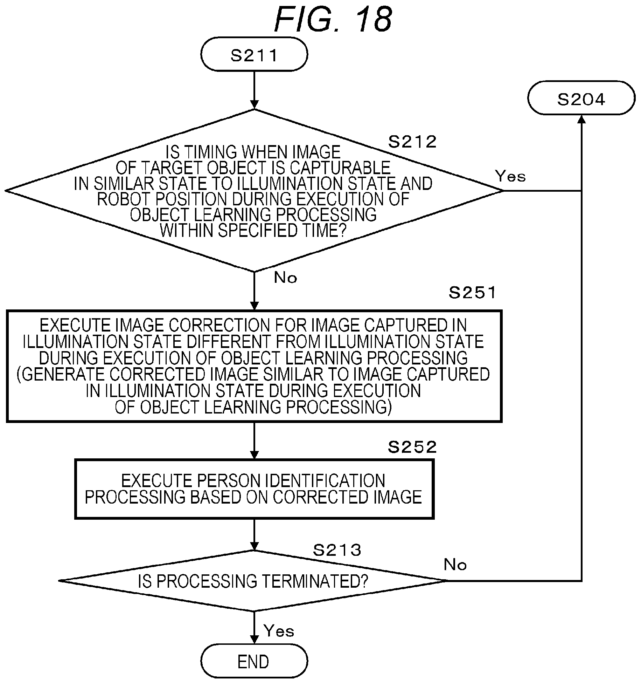

A processing sequence according to present Example 5 will be described with reference to the flowchart illustrated in Fig. 18.

The flow illustrated in Fig. 18 is a flowchart obtained by revising the flowchart of Example 3 described above, that is, the processing of and after step S212 of the flows illustrated in Figs. 13 and 14, similarly to the flow of Fig. 16 of Example 4 described above.

The processing of steps S201 to S211 described in Example 3 is similarly executed in Example 5.

In present Example 5, in the case where it is determined in step S212 that there is no timing at which the image of the target object can be captured in a state similar to the illumination state and the robot position at the time of executing the object learning processing within the specified time in the future, the processing of step S251 and subsequent steps illustrated in Fig. 18 is executed.

Processing of step S251 and subsequent steps will be described.

### (step S251)

In step S212, in the case where it is determined that there is no timing at which the image of the target object can be captured in a state similar to the illumination state and the robot position at the time of executing the object learning processing within the specified time in the future, the information processing device executes the processing of step S251.

In step S251, the information processing device executes the image correction processing for the image captured in the illumination state different from the illumination state at the time of executing the object learning processing. Specifically, a corrected image similar to that captured in the illumination state at the time of executing the object learning processing is generated.

A specific example of the image correction processing will be described.

For example, a processing example of a case where white illumination is emitted from directly above the performer at the time of executing the learning processing and warm illumination as the current illumination is emitted from a lateral direction of the performer is as follows.

Image correction processing of correcting the image captured under the current illumination, that is, in the state where the warm illumination is emitted from the lateral direction of the performer, to generate an image in a state where white illumination is emitted from directly above the performer, is performed.

### (step S252)

Next, in step S252, the information processing device acquires the feature information from the corrected image generated in step S251, and performs the person identification processing by performing the collation processing between the acquired feature information and the feature information stored in the storage unit, that is, between the acquired feature information and the feature information acquired in the object learning processing.

As described above, in present Example 5, the image correction processing of correcting the image captured in the illumination state different from the illumination state at the time of executing the object learning processing to an image similar to the image captured in the illumination state at the time of executing the object learning processing is executed, and the person identification processing is executed using the generated corrected image.

As a result, it is possible to perform the highly accurate person identification processing on the basis of images captured in various illumination states.

### (5-3 (Example 6) Example of executing person identification processing in consideration of various state changes on stage)

Next, as Example 6, an example of executing the person identification processing in consideration of various state changes on the stage will be described.

In Example 1 and Example 2 described above, the execution examples of the person identification processing in consideration of the ON/OFF state of the illumination have been described. Furthermore, in Example 3, the execution example of the person identification processing in consideration of the ON/OFF state of the illumination and the robot position has been described.

However, the state change on the stage is not only the ON/OFF state of the illumination or the robot position.

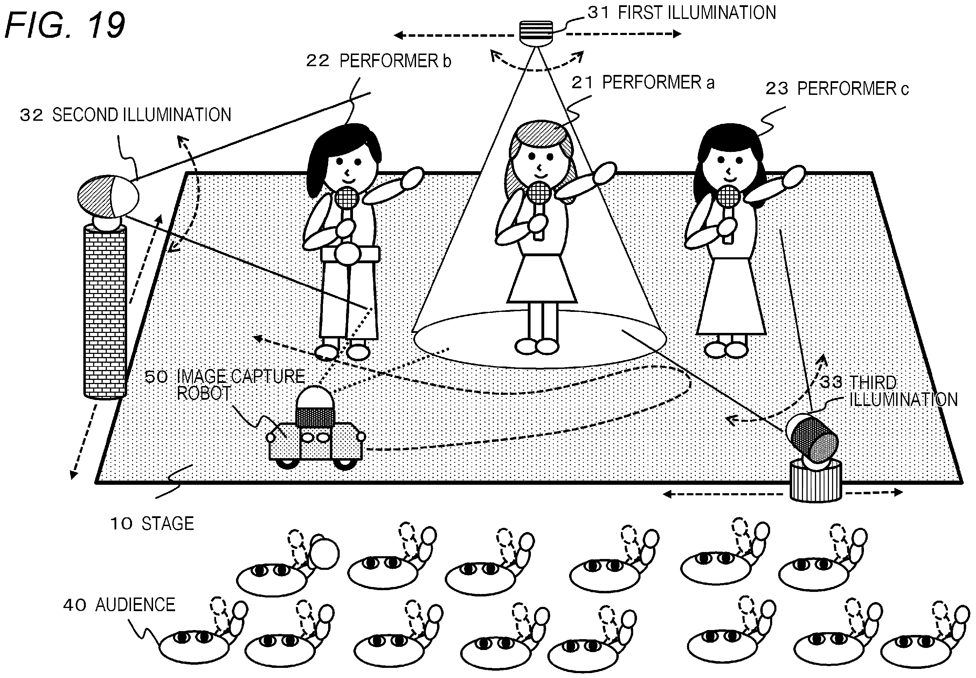

The performers 21 to 23 illustrated in Fig. 19 move to various positions during the performance. Furthermore, not only the ON/OFF control of the pieces of illumination 31 to 33, but also the positions and the light irradiation directions of the pieces of illumination 31 to 33 may be changed. Moreover, the color of the illumination light may also be controlled.

Example 6 to be described below is an example of controlling the timing to execute the person identification processing in consideration of changes in various environmental states.

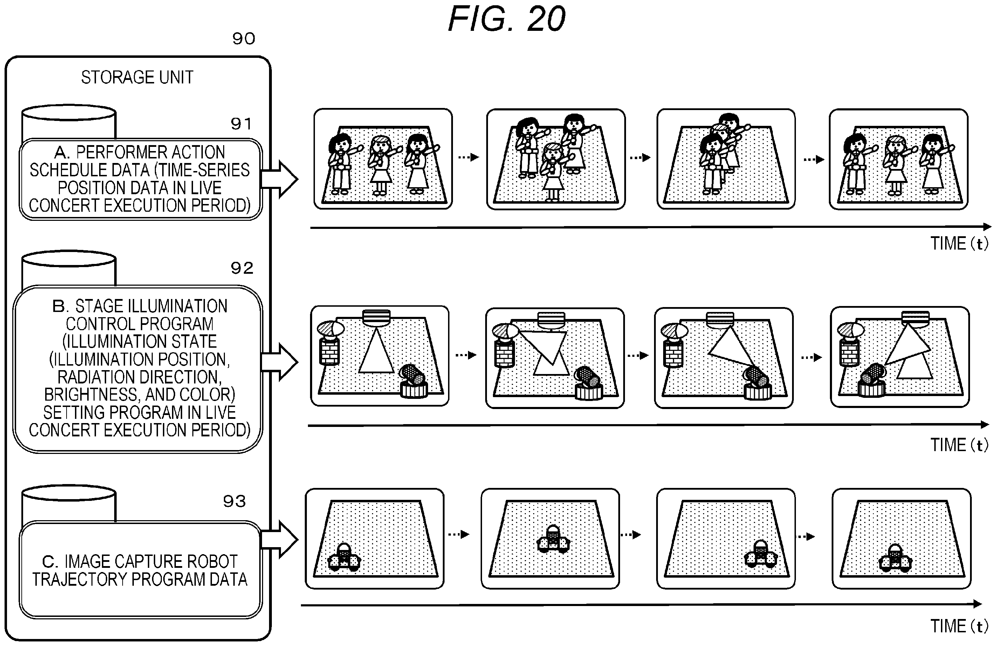

Fig. 20 is a diagram for describing examples of data stored in a storage unit 90 in the information processing device in the image capture robot 50.

As illustrated in Fig. 20, each data below is stored in the storage unit 90:
(A) performer action schedule data 91;
(B) stage illumination control schedule data 92; and
(C) image capture robot traveling schedule data 93.

The "(A) performer action schedule data 91" is data in which position information of each performer from a start time to an end time of the performance is recorded, that is, time-series position data of each performer.

The "(B) stage illumination control schedule data 92" is illumination control program data in which the ON/OFF state, position, irradiation direction, and color of each illumination from the start time to the end time of the performance are recorded.

The "(C) image capture robot travel schedule data 93" is data in which position information of the image capture robot from the start time to the end time of the performance is recorded.

These pieces of data are recorded in advance in the storage unit 90 in the information processing device in the image capture robot 50.

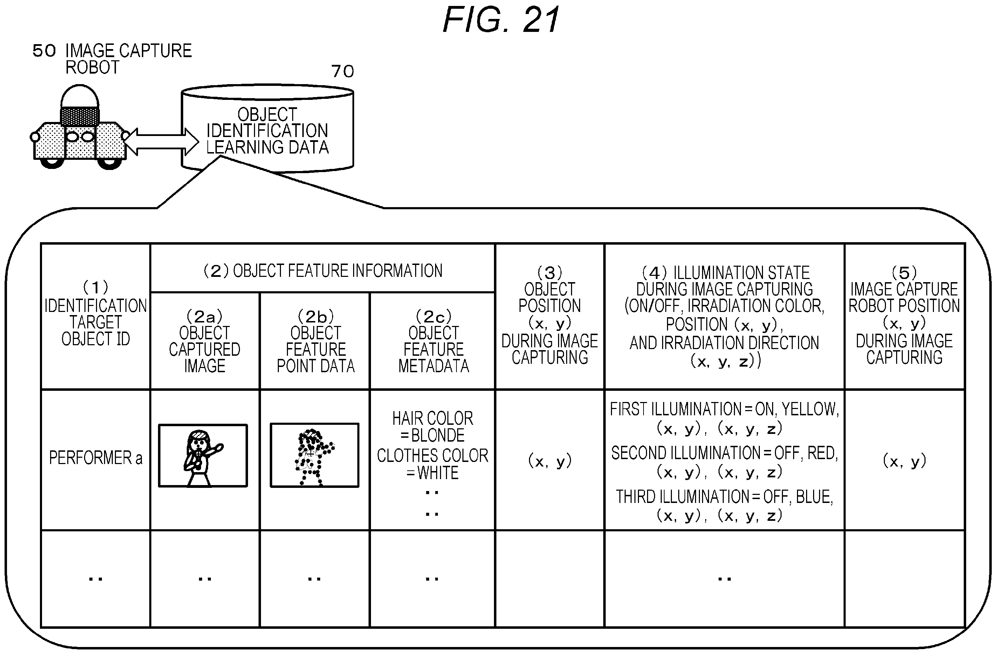

Similarly to Figs. 7 and 15 described above, Fig. 21 is a diagram illustrating an example of data recorded in the storage unit by the information processing device when the feature information acquisition processing for the specific object to be tracked (performer to be tracked), that is, the object learning processing, is executed.

The information processing device executes the object learning processing of acquiring the feature information of the object, generates the object identification learning data 70, and stores the object identification learning data 70 in the storage unit in the information processing device.

In the present example, the information processing device stores following each data as illustrated in Fig. 21:
(1) an object to be identified ID;
(2) object feature information (collation feature information); and
(3) the object position (x, y) at the time of capturing an image;
(4) the illumination states (ON/OFF, irradiation color, position, irradiation direction) at the time of capturing the image; and
(5) the position of the image capture robot at the time of capturing the image.

(2) The object feature information (collation feature information) includes, for example, the following information:
(2a) an object image;
(2b) object feature point data; and
(2c) object feature metadata.

In present Example 6, more environmental information (environmental information at the time of capturing an image used for the learning processing) than the information illustrated in Figs. 7 and 15 described above is recorded in association with the object feature.

When determining whether or not to perform the object identification processing after the pieces of learning data are recorded in the storage unit, it is determined whether or not the environment information recorded in the storage unit, the environment information when the object learning processing has been performed, that is, the following pieces of environment information are similar to the current environment:
(3) the object position (x, y) at the time of capturing the image;
(4) the illumination states (ON/OFF, irradiation color, position, and irradiation direction) at the time of capturing the image; and
(5) the position of the image capture robot at the time of capturing the image, and
only in the case where it is determined that the environment information is similar to the current environment, the person identification processing is executed.

Note that determination criteria of the similarity are defined in advance.

For example, the object position (x, y) completely matches that at the time of executing the learning processing, or processing of determining the similarity when the object position is in a range of a predefined positional deviation is performed.

For the illumination state and the robot position, criteria for determining the similarity are defined in advance.

The information processing device executes the person identification processing only in a case where all the pieces of environment information (3) to (5) can be determined to be similar.

By performing such processing, more accurate person identification processing can be implemented.

Moreover, as another control configuration, processing of changing settings of image capturing control parameters of the camera of the image capture robot 50, for example, a shutter speed, an exposure time, an angle of view, and the like at the time of capturing an image for performing the person identification processing may be performed.

For example, processing of changing image capture parameters for enabling capturing of an image similar to the captured image at the time of executing the learning processing.

Furthermore, processing in which the image capture robot 50 outputs a sign such as light blinking to the performer (performer) to cause the performer to face the camera of the image capture robot 50 at the time of capturing an image for performing the person identification processing may be performed.

Note that the above-described plurality of examples and the above-described various execution configurations may be individually executed, or any plurality of examples may be appropriately combined and executed.

### [6. Configuration example of information processing device]

Next, a configuration example of the information processing device will be described.

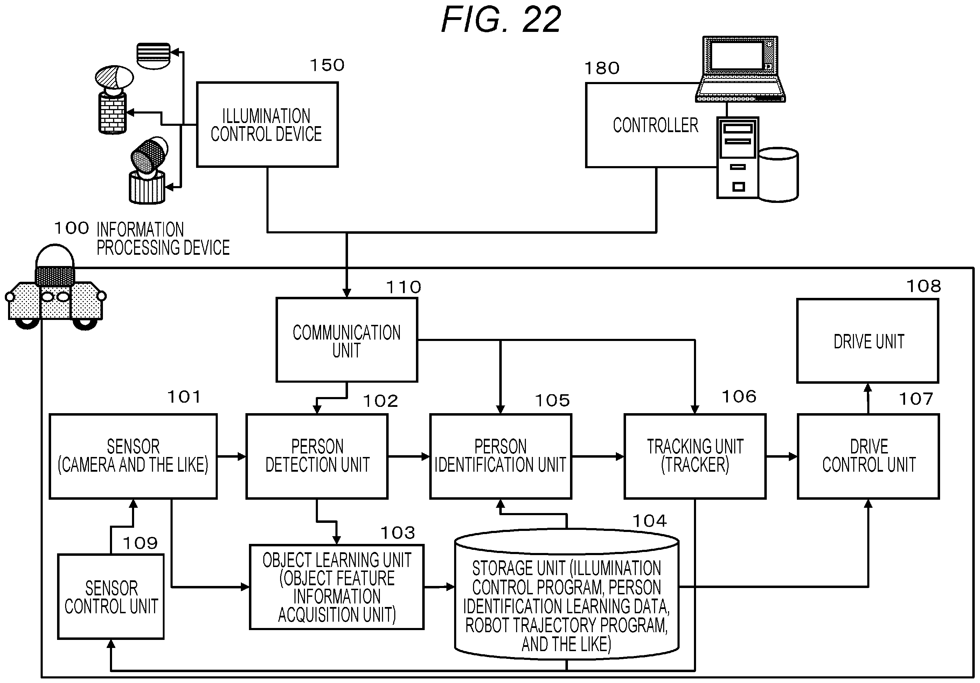

Fig. 22 is a diagram illustrating a configuration example of the information processing device 100.

Note that the example illustrated in Fig. 22 is an example in which the information processing device 100 is configured inside the image capture robot 50, but as described above, the information processing device 100 may be configured as another device capable of communicating with the image capture robot 50.

The information processing device 100 illustrated in Fig. 22 includes a sensor (camera or the like) 101, a person detection unit 102, an object learning unit (object feature information acquisition unit) 103, a storage unit 104, a person identification unit 105, a tracking unit (tracker) 106, a drive control unit 107, a drive unit 108, a sensor control unit 109, and a communication unit 110.

The communication unit 110 communicates with an illumination control device 150 and a controller 180.

The sensor (camera or the like) 101 is, for example, an RGB camera. In addition, a sensor such as a stereo camera or a distance sensor may be used in combination.

The person detection unit 102 detects the image area of the person from the captured image captured by the sensor (camera or the like) 101. For example, the detection is executed by applying person shape detection processing or face image detection processing using existing pattern matching, or the like.

The object learning unit (object feature information acquisition unit) 103 executes the person identification data learning processing of acquiring the feature information for identifying who the person detected by the person detection unit 102 is. The learning image captured by the sensor 101 is analyzed and the feature information for person identification is acquired. The acquired person identification feature information (collation feature information) is stored in the storage unit 104.

Note that, in the storage unit 104, the illumination state and the robot position at the time of executing the learning processing and other environmental information are recorded in association with the person identification feature information (collation feature information).

Specifically, the object identification learning data as described with reference to Figs. 7, 15, and 21 above is stored in the storage unit 104.

The storage unit 104 stores the following data in addition to the object identification learning data including the person identification feature information (collation feature information) generated by the object learning unit (object feature information acquisition unit) 103:
the illumination control program;
the robot trajectory program; and
the performer action schedule data.

These are, for example, the data described with reference to Figs. 2, 12, and 20 above, and are data in which the illumination control sequence, the robot trajectory, and the performer position from the start to the end of the performance are recorded.

The person identification unit 105 executes the person identification processing of identifying who the person detected by the person detection unit 102 is. For example, processing of determining whether or not the detected person is the object to be tracked (performer to be tracked) or the like is executed.

This person identification processing is executed by the collation processing between the feature data of the person detected from the currently captured image and feature data of the object to be tracked stored in the storage unit by the above-described learning processing executed by the object learning unit (object feature information acquisition unit) 103.

Note that the person identification unit 105 also executes determination processing as to whether or not to execute the person identification processing.

That is, determination processing as to whether or not the current environmental state, specifically, the illumination state or the like is similar to the illumination state at the time of executing the learning processing is executed, and the person identification processing is executed only in the case where the similarity is determined.

The person identification unit 105 refers to, for example, the illumination control program stored in the storage unit 104, and determines whether or not the illumination state at the time of capturing the image is similar to the illumination state at the time of capturing the learning image from which the collation feature information has been acquired.

Furthermore, the person identification unit 105 may perform the processing of Example 5 described above, that is, may perform the correction processing for the captured image to generate the corrected image, and execute the person identification processing using the generated corrected image.

That is, in the case where it is determined that the illumination state at the time of capturing the image captured by the sensor 101 is not similar to the illumination state at the time of capturing the learning image in which the collation feature information stored in the storage unit 104 has been acquired, the correction processing is executed for the captured image input from the sensor 101 via the person detection unit 102, a corrected image similar to the image captured in the illumination state similar to the illumination state at the time of capturing the learning image is generated, and the person identification processing to which the generated corrected image is applied is executed.

The tracking unit (tracker) 106 executes the tracking control processing for the person to be tracked identified by the person identification unit 105. For example, processing of controlling the capture direction of the camera of the image capture robot 50 or the like is performed.

The tracking unit (tracker) 106 further performs the processing of Example 4 described with reference to Fig. 16 above, that is, the processing of revising the trajectory of the image capture robot.

Specifically, as described with reference to Fig. 16, in step S212 illustrated in Fig. 16, in the case where it is determined that there is no timing at which the image of the target object can be captured in a state similar to the illumination state and the robot position at the time of executing the object learning processing within the specified time in the future, the following processing executed in step S231 is executed.

That is, in step S231, processing of revising the trajectory of the image capture robot and setting the timing at which the image of the target object can be captured in a state similar to the illumination state and the robot position at the time of executing the object learning processing is performed.

The drive control unit 107 controls the drive unit 108 to move the image capture robot 50.

For example, the sensor control unit 109 performs image capture control parameter setting processing for causing the sensor 101 to capture an image similar to the image captured in the illumination state at the time of capturing the learning image.

For example, in the case where it is determined that the illumination state at the time of capturing the image is not similar to the illumination state at the time of capturing the learning image from which the collation feature information has been acquired, setting of the image capture control parameters, for example, the shutter speed, the exposure time, the angle of view, and the like, which enable the sensor (camera) 101 to capture the image similar to the image captured in the illumination state at the time of capturing the learning image, is executed.

The communication unit 110 communicates with an illumination control device 150 and a controller 180.

The illumination control device 150 provides the illumination control information to the information processing device 100. The controller 180 transmits, for example, designation information of the person to be tracked, a tracking start command, and the like to the information processing device 100.

### [7. Hardware configuration example of information processing device]

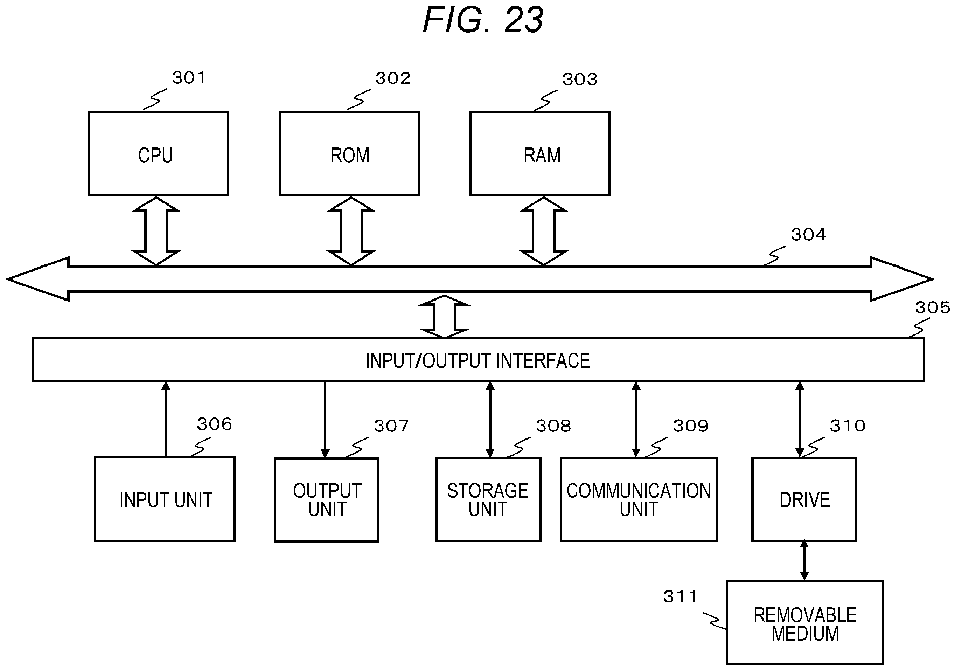

Next, a hardware configuration example of an information processing device that performs processing according to the above-described examples will be described with reference to Fig. 23.

The hardware illustrated in Fig. 23 is an example of a hardware configuration of the information processing device 100 described with reference to Fig. 22.

The hardware configuration illustrated in Fig. 23 will be described.

A central processing unit (CPU) 301 functions as a data processing unit configured to execute various types of processing in accordance with a program stored in a read only memory (ROM) 302 or a storage unit 308. For example, the CPU 301 executes the processing according to the sequence described in the above example. A random access memory (RAM) 303 stores programs, data, or the like to be performed by the CPU 301. The CPU 301, the ROM 302, and the RAM 303 are connected to each other by a bus 304.

The CPU 301 is connected to an input/output interface 305 via the bus 304, and an input unit 306 including various sensors, a camera, a switch, a keyboard, a mouse, a microphone, and the like, and an output unit 307 including a display, a speaker, and the like are connected to the input/output interface 305.

The storage unit 308 connected to the input/output interface 305 includes, for example, a hard disk, or the like and stores programs executed by the CPU 301 and various types of data. A communication unit 309 functions as a transmitter and receiver for data communication via a network such as the Internet or a local area network, and communicates with an external device.

A drive 310 connected to the input/output interface 305 drives a removable medium 311 such as a magnetic disk, an optical disk, a magneto-optical disk, or a semiconductor memory such as a memory card, and records or reads data.

### [8. Conclusion of configuration of present disclosure]

Hereinabove, the examples according to the present disclosure have been described in detail with reference to the specific examples. However, it is obvious that those skilled in the art can modify or substitute the examples without departing from the gist of the present disclosure. That is, the present invention has been disclosed in the form of exemplification, and should not be interpreted in a limited manner. In order to determine the gist of the present disclosure, the claims should be considered.

Note that the technology disclosed herein may have the following configurations.
(1) An information processing device including:
   a person identification unit configured to input a camera-captured image, acquire feature information for person identification from the input image, and execute collation processing between the acquired feature information and collation feature information to execute person identification processing, in which
   the person identification unit
   determines whether or not an illumination state at a time of capturing the input image is similar to an illumination state at a time of capturing a learning image from which the collation feature information has been acquired, and
   executes the person identification processing to which the input image is applied in a case where the similarity is determined.
(2) The information processing device according to (1), in which
   the person identification unit
   determines whether or not the illumination state at the time of capturing the input image is similar to the illumination state at the time of capturing the learning image from which the collation feature information has been acquired with reference to an illumination control program generated in advance.
(3) The information processing device according to (1) or (2), in which
   the person identification unit
   determines whether or not the illumination state at the time of capturing the input image is similar to the illumination state at the time of capturing the learning image from which the collation feature information has been acquired with reference to object identification learning data in which the collation feature information and illumination state information at the time of capturing the learning image from which the collation feature information has been acquired are associated with each other.
(4) The information processing device according to any one of (1) to (3), further including:
   a storage unit configured to store object identification learning data in which the collation feature information and the illumination state information at the time of capturing the learning image from which the collation feature information has been acquired are associated with each other.
(5) The information processing device according to any one of (1) to (4), in which the illumination state includes at least an ON/OFF state indicating whether or not each illumination is in an ON state or an OFF state.
(6) The information processing device according to any one of (1) to (5), in which the illumination state includes at least one of an ON/OFF state indicating whether or not each illumination is in an ON state or an OFF state, a position of each illumination, a color of each illumination, or a light irradiation direction of each illumination.
(7) The information processing device according to any one of (1) to (6), further including:
   an object learning unit configured to generate object identification learning data including the collation feature information and store the object identification learning data in a storage unit.
(8) The information processing device according to (7), in which
   the object learning unit
   acquires the collation feature information from the learning image and acquires illumination state information at the time of capturing the learning image, and
   generates object identification learning data in which the collation feature information and the illumination state information at the time of capturing the learning image from which the collation feature information has been acquired are associated with each other, and stores the object identification learning data in the storage unit.
(9) The information processing device according to (8), in which
   the object learning unit
   executes a plurality of pieces of learning processing of acquiring the collation feature information under a plurality of different illumination states, and
   generates a plurality of pieces of correspondence data of the collation feature information acquired under the plurality of different illumination states and the illumination state information, and stores the plurality of pieces of correspondence data in the storage unit.
(10) The information processing device any one of (1) to (9), in which
   the person identification unit
   determines whether or not a position of an image capture robot that has captured the input image is similar to the position of the image capture robot at the time of capturing the learning image from which the collation feature information has been acquired, and
   executes the person identification processing to which the input image is applied in a case where the similarity is determined.
(11) The information processing device according to (10), further including:
   an object learning unit configured to generate object identification learning data including the collation feature information and store the object identification learning data in a storage unit, in which
   the object learning unit
   acquires the collation feature information from the learning image and acquires illumination state information at the time of capturing the learning image and position information of the image capture robot, and
   generates object identification learning data in which the collation feature information, the illumination state information at the time of capturing the learning image from which the collation feature information has been acquired, and the position information of the image capture robot are associated with one another, and stores the object identification learning data in a storage unit.
(12) The information processing device according to (10) or (11), further including:
   a tracking unit configured to execute trajectory revision processing of the image capture robot, the trajectory revision processing enabling image capture in a state similar to an illumination state and a robot position at the time of capturing the learning image.
(13) The information processing device any one of (1) to (12), in which,
   in a case where it is determined that the illumination state at the time of capturing the input image is not similar to the illumination state at the time of capturing the learning image from which the collation feature information has been acquired,
   the person identification unit
   executes correction processing for the input image, generates a corrected image similar to an image captured in an illumination state similar to the illumination state at the time of capturing the learning image, and executes the person identification processing to which the generated corrected image is applied.
(14) The information processing device according to any one of (1) to (13), in which
   the person identification unit
   determines whether or not a position of an object to be a person to be identified is similar at the time of capturing the input image and at the time of capturing the learning image, and
   executes the person identification processing to which the input image is applied in a case where the similarity is determined.
(15) The information processing device according to any one of (1) to (14), further including:
   a sensor control unit configured to set,
   in a case where it is determined that the illumination state at the time of capturing the input image is not similar to the illumination state at the time of capturing the learning image from which the collation feature information has been acquired,
   in a camera, an image capture control parameter used to capture an image similar to the captured image in the illumination state at the time of capturing the learning image.
(16) An information processing method executed in an information processing device, the information processing method including:
   by a person identification unit, a person identification processing step of inputting a camera-captured image, acquiring feature information for person identification from the input image, and executing collation processing between the acquired feature information and collation feature information to execute person identification processing, in which
   in the person identification step, the person identification unit executes:
      a step of determining whether or not an illumination state at a time of capturing the input image is similar to an illumination state at a time of capturing a learning image from which the collation feature information has been acquired; and
      a step of executing the person identification processing to which the input image is applied in a case where the similarity is determined.
(17) A program for causing an information processing device to execute information processing, the program for causing a person identification unit to execute:
   a person identification processing step of inputting a camera-captured image, acquiring feature information for person identification from the input image, and executing collation processing between the acquired feature information and collation feature information to execute person identification processing; and
   in the person identification step,
   a step of determining whether or not an illumination state at a time of capturing the input image is similar to an illumination state at a time of capturing a learning image from which the collation feature information has been acquired; and
   a step of executing the person identification processing to which the input image is applied in a case where the similarity is determined.

Furthermore, a series of processes described herein can be executed by hardware, software, or a configuration obtained by combining hardware and software. In a case of processing by software is executed, a program in which a processing sequence is recorded can be installed and performed in a memory in a computer incorporated in dedicated hardware, or the program can be installed and performed in a general-purpose computer capable of executing various types of processing. For example, the program can be recorded in advance in a recording medium. In addition to being installed in a computer from the recording medium, a program can be received via a network such as a local area network (LAN) or the Internet and installed in a recording medium such as an internal hard disk or the like.

Note that the various processes described herein may be executed not only in a chronological order in accordance with the description, but may also be executed in parallel or individually depending on processing capability of a device that executes the processing or depending on the necessity. Furthermore, a system herein described is a logical set configuration of a plurality of devices, and is not limited to a system in which devices of respective configurations are in the same housing.

### INDUSTRIAL APPLICABILITY

As described above, according to the configuration of an example of the present disclosure, it is possible to perform highly accurate person identification processing by executing person identification processing in a case where it is confirmed that an illumination state at the time of capturing an image is similar to an illumination state at the time of capturing a learning image from which collation feature information has been acquired.

Specifically, for example, a person identification unit that inputs a camera-captured image, acquires feature information for person identification from the input image, and executes collation processing between the acquired feature information and the collation feature information to execute the person identification processing is included. The person identification unit determines whether or not the illumination state at the time of capturing the input image is similar to the illumination state at the time of capturing the learning image from which the collation feature information has been acquired with reference to an illumination control program generated in advance, and executes the person identification processing to which the input image is applied in a case where the similarity is determined.

With the configuration, it is possible to perform highly accurate person identification processing by executing the person identification processing in the case where it is confirmed that the illumination state at the time of capturing an image is similar to the illumination state at the time of capturing the learning image from which the collation feature information has been acquired.

### REFERENCE SIGNS LIST

10 Stage
21 to 23 Performer
31 to 33 Illumination
40 Audience
70 Object identification learning data
80 Image capture robot trajectory program data
90 Storage unit
91 Performer action schedule data
92 Stage illumination control program
93 Image capture robot trajectory program data
100 Information processing device
101 Sensor (camera or the like)
102 Person detection unit
103 Object learning unit (object feature information acquisition unit)
104 Storage unit
105 Person identification unit
106 Tracking unit (tracker)
107 Drive control unit
108 Drive unit
109 Sensor control unit
110 Communication unit
150 Illumination control device
180 Controller
301 CPU
302 ROM
303 RAM
304 Bus
305 Input/output interface
306 Input unit
307 Output unit
308 Storage unit
309 Communication unit
310 Drive
311 Removable medium

## Claims

1. An information processing device comprising:
a person identification unit configured to input a camera-captured image, acquire feature information for person identification from the input image, and execute collation processing between the acquired feature information and collation feature information to execute person identification processing, wherein
the person identification unit
determines whether or not an illumination state at a time of capturing the input image is similar to an illumination state at a time of capturing a learning image from which the collation feature information has been acquired, and
executes the person identification processing to which the input image is applied in a case where the similarity is determined.

2. The information processing device according to claim 1, wherein
the person identification unit
determines whether or not the illumination state at the time of capturing the input image is similar to the illumination state at the time of capturing the learning image from which the collation feature information has been acquired with reference to an illumination control program generated in advance.

3. The information processing device according to claim 1, wherein
the person identification unit
determines whether or not the illumination state at the time of capturing the input image is similar to the illumination state at the time of capturing the learning image from which the collation feature information has been acquired with reference to object identification learning data in which the collation feature information and illumination state information at the time of capturing the learning image from which the collation feature information has been acquired are associated with each other.

4. The information processing device according to claim 1, further comprising:
a storage unit configured to store object identification learning data in which the collation feature information and illumination state information at the time of capturing the learning image from which the collation feature information has been acquired are associated with each other.

5. The information processing device according to claim 1, wherein the illumination state includes at least an ON/OFF state indicating whether or not each illumination is in an ON state or an OFF state.

6. The information processing device according to claim 1, wherein the illumination state includes at least one of an ON/OFF state indicating whether or not each illumination is in an ON state or an OFF state, a position of each illumination, a color of each illumination, or a light irradiation direction of each illumination.

7. The information processing device according to claim 1, further comprising:
an object learning unit configured to generate object identification learning data including the collation feature information and store the object identification learning data in a storage unit.

8. The information processing device according to claim 7, wherein
the object learning unit
acquires the collation feature information from the learning image and acquires illumination state information at the time of capturing the learning image, and
generates object identification learning data in which the collation feature information and the illumination state information at the time of capturing the learning image from which the collation feature information has been acquired are associated with each other, and stores the object identification learning data in the storage unit.

9. The information processing device according to claim 8, wherein
the object learning unit
executes a plurality of pieces of learning processing of acquiring the collation feature information under a plurality of different illumination states, and
generates a plurality of pieces of correspondence data of the collation feature information acquired under the plurality of different illumination states and the illumination state information, and stores the plurality of pieces of correspondence data in the storage unit.

10. The information processing device according to claim 1, wherein
the person identification unit
determines whether or not a position of an image capture robot that has captured the input image is similar to the position of the image capture robot at the time of capturing the learning image from which the collation feature information has been acquired, and
executes the person identification processing to which the input image is applied in a case where the similarity is determined.

11. The information processing device according to claim 10, further comprising:
an object learning unit configured to generate object identification learning data including the collation feature information and store the object identification learning data in a storage unit, wherein
the object learning unit
acquires the collation feature information from the learning image and acquires illumination state information at the time of capturing the learning image and position information of the image capture robot, and
generates object identification learning data in which the collation feature information, the illumination state information at the time of capturing the learning image from which the collation feature information has been acquired, and the position information of the image capture robot are associated with one another, and stores the object identification learning data in a storage unit.

12. The information processing device according to claim 10, further comprising:
a tracking unit configured to execute trajectory revision processing of the image capture robot, the trajectory revision processing enabling image capture in a state similar to an illumination state and a robot position at the time of capturing the learning image.

13. The information processing device according to claim 1, wherein,
in a case where it is determined that the illumination state at the time of capturing the input image is not similar to the illumination state at the time of capturing the learning image from which the collation feature information has been acquired,
the person identification unit
executes correction processing for the input image, generates a corrected image similar to an image captured in an illumination state similar to the illumination state at the time of capturing the learning image, and executes the person identification processing to which the generated corrected image is applied.

14. The information processing device according to claim 1, wherein
the person identification unit
determines whether or not a position of an object to be a person to be identified is similar at the time of capturing the input image and at the time of capturing the learning image, and
executes the person identification processing to which the input image is applied in a case where the similarity is determined.

15. The information processing device according to claim 1, further comprising:
a sensor control unit configured to set,
in a case where it is determined that the illumination state at the time of capturing the input image is not similar to the illumination state at the time of capturing the learning image from which the collation feature information has been acquired,
in a camera, an image capture control parameter used to capture an image similar to the captured image in the illumination state at the time of capturing the learning image.

16. An information processing method executed in an information processing device, the information processing method comprising:
by a person identification unit, a person identification processing step of inputting a camera-captured image, acquiring feature information for person identification from the input image, and executing collation processing between the acquired feature information and collation feature information to execute person identification processing, wherein
in the person identification step, the person identification unit executes:
a step of determining whether or not an illumination state at a time of capturing the input image is similar to an illumination state at a time of capturing a learning image from which the collation feature information has been acquired; and
a step of executing the person identification processing to which the input image is applied in a case where the similarity is determined.

17. A program for causing an information processing device to execute information processing, the program for causing a person identification unit to execute:
a person identification processing step of inputting a camera-captured image, acquiring feature information for person identification from the input image, and executing collation processing between the acquired feature information and collation feature information to execute person identification processing; and
in the person identification step,
a step of determining whether or not an illumination state at a time of capturing the input image is similar to an illumination state at a time of capturing a learning image from which the collation feature information has been acquired; and
a step of executing the person identification processing to which the input image is applied in a case where the similarity is determined.
